# EUROPEAN PATENT APPLICATION

(11) **EP 4 746 564 A1**
(43) Date of publication of application: **20.05.2026**
(21) Application number: 24850762.6
(22) Date of filing: 16.07.2024
(51) Int. Cl.: H04W 72/542

(54) **UPLINK INTERFERENCE MEASUREMENT METHOD AND APPARATUS**

(30) Priority: 09.08.2023 CN 202311002284
(71) Applicant: Huawei Technologies Co., Ltd., Shenzhen, Guangdong 518129 (CN)
(72) Inventor: YANG, Liu, Shenzhen, Guangdong 518129 (CN); ZHANG, Xiaoyu, Shenzhen, Guangdong 518129 (CN); LIAO, Shuri, Shenzhen, Guangdong 518129 (CN); YU, Tong, Shenzhen, Guangdong 518129 (CN); DOU, Shengyue, Shenzhen, Guangdong 518129 (CN)
(74) Representative: MERH-IP Matias Erny Reichl Hoffmann Patentanwälte PartG mbB
(86) International application number: PCT/CN2024/105752
(87) International publication number: WO 2025/031111

(57) **Abstract**

An uplink interference measurement method and apparatus are provided, and relate to the communication field. In the method, a network device sends first information to a terminal device, where the first information indicates at least one time-frequency resource. I time-frequency resources in the at least one time-frequency resource occupy M consecutive slots in time domain and occupy N consecutive RBs in frequency domain. Each of the I time-frequency resources includes K measurement resource blocks, and each measurement resource block occupies one slot in time domain and occupies one RB in frequency domain. A quantity of REs for uplink interference measurement in each measurement resource block is less than a total quantity of REs included in each measurement resource block. K≤M*N. The network device measures an uplink interference signal on the resource element for uplink interference measurement in each measurement resource block. According to the foregoing method, resource overheads for uplink interference measurement can be greatly reduced.

## Description

### CROSS-REFERENCE TO RELATED APPLICATIONS

This application claims priority to Chinese Patent Application No. 202311002284.3, filed with the China National Intellectual Property Administration on August 9, 2023 and entitled "UPLINK INTERFERENCE MEASUREMENT METHOD AND APPARATUS", which is incorporated herein by reference in its entirety.

### TECHNICAL FIELD

This application relates to the field of communication technologies, and in particular, to an uplink interference measurement method and apparatus.

### BACKGROUND

With booming development of satellite communication, spectrum resources are rapidly occupied and gradually become scarce. To expand a bandwidth, attempts at exploring co-construction and sharing of the spectrum resources are gradually made in satellite communication. Co-construction and sharing of the spectrum resources can improve resource utilization and reduce construction costs. However, a problem of co-channel/adjacent-channel interference between a satellite and the ground or between high and low orbits needs to be resolved.

Specifically, inter-system interference may be classified into downlink interference and uplink interference based on signal directions. In an uplink interference scenario, how to configure a resource for measuring uplink interference without causing a significant waste of resources is a problem worthy of attention.

### SUMMARY

This application provides an uplink interference measurement method and apparatus, to implement uplink interference measurement with low resource overheads.

According to a first aspect, this application provides an uplink interference measurement method. The method may be performed by a network device or a module (for example, a chip) in the network device. The method includes: The network device sends first information to a terminal device. The first information indicates at least one time-frequency resource. I time-frequency resources in the at least one time-frequency resource occupy M consecutive slots in time domain and occupy N consecutive RBs in frequency domain. Each of the I time-frequency resources includes K measurement resource blocks, and each measurement resource block occupies one slot in time domain and occupies one RB in frequency domain. A quantity of REs for uplink interference measurement in each measurement resource block is less than a total quantity of REs included in each measurement resource block. M, N, K, and I are positive integers, and K≤M*N. The network device measures an uplink interference signal on the resource element for uplink interference measurement in each measurement resource block.

According to the foregoing method, the network device measures the uplink interference signal on the resource element for uplink interference measurement in each measurement resource block. The quantity of the resource elements for uplink interference measurement in each measurement resource block is less than the total quantity of the resource elements included in each measurement resource block. Therefore, resource overheads for uplink interference measurement can be greatly reduced by using the foregoing method.

In a possible design, the first information includes S pieces of indication information, each piece of indication information indicates one time-frequency resource, and the S pieces of indication information are in one-to-one correspondence with S time-frequency resources. S is a positive integer greater than or equal to 1, and when a value of S is greater than or equal to 2, the S time-frequency resources are different from each other. Alternatively, the at least one time-frequency resource is a periodic time-frequency resource, and the first information includes one piece of indication information and a periodicity. The piece of indication information indicates one time-frequency resource, and the periodicity is a periodicity of the time-frequency resource indicated by the piece of indication information.

According to the foregoing design, the network device can configure at least one time-frequency resource for the terminal device, and the at least one time-frequency resource may be a periodic resource or an aperiodic resource.

In a possible design, in the I time-frequency resources, indication information corresponding to an i^{th} time-frequency resource includes at least one of the following: start slot indication information of the i^{th} time-frequency resource, start resource block indication information of the i^{th} time-frequency resource, pattern indication information of the i^{th} time-frequency resource, and pattern indication information of the RE for uplink interference measurement. A pattern of the i^{th} time-frequency resource is used to determine locations of the K measurement resource blocks in the i^{th} time-frequency resource, and a pattern of the RE for uplink interference measurement is used to determine a location of the RE for uplink interference measurement in the measurement resource block. i is any positive integer ranging from 1 to I.

According to the foregoing design, the pattern and a time-frequency start location of the i^{th} time-frequency resource, and the pattern of the RE for uplink interference measurement in each measurement block in the i^{th} time-frequency resource may be determined based on the foregoing information.

In a possible design, in the I time-frequency resources, the pattern of the i^{th} time_ frequency resource is determined based on a pattern of a repetition block in the i^{th} time-frequency resource, a quantity C1 of repetitions of the repetition block in time domain, and a quantity C2 of frequency-domain repetitions of the repetition block in frequency domain. The repetition block occupies m consecutive slots in time domain and occupies n consecutive RBs in frequency domain. The repetition block includes k measurement resource blocks. The pattern of the repetition block indicates locations of the k measurement resource blocks in the repetition block. C1, C2, m, n, and k are positive integers, k≤m*n, M=m*C1, N=n*C2, and K=k*C1*C2. i is any positive integer ranging from 1 to I.

According to the foregoing design, the network device may indicate the pattern of the repetition block in the i^{th} time-frequency resource and the quantity of the repetitions of the repetition block in time-frequency domain, to obtain the pattern of the i^{th} time-frequency resource.

In a possible design, the pattern indication information of the i^{th} time-frequency resource includes pattern indication information of the repetition block, the quantity C1 of the repetitions of the repetition block in time domain, and the quantity C2 of the repetitions of the repetition block in frequency domain.

In a possible design, the pattern indication information of the repetition block includes an index of the pattern of the repetition block, or a parameter used to determine the pattern of the repetition block.

According to the foregoing design, a design with low resource overheads is met, and signaling overheads can be reduced.

In a possible design, the pattern of the repetition block is determined based on a pattern of a first time-frequency resource element and a pattern of a second time-frequency resource element. The first time-frequency resource element occupies m1 consecutive slots in time domain and occupies n1 consecutive RBs in frequency domain. The first time-frequency resource element includes s1 measurement resource blocks. The second time-frequency resource element occupies m2 consecutive slots in time domain and occupies n2 consecutive RBs in frequency domain. The second time-frequency resource element includes s2 measurement resource blocks. m1, m2, n1, n2, s1, and s2 are positive integers, k=s1*s2, m=m1*m2, and n=n1*n2. The pattern of the first time-frequency resource element indicates locations of the s1 measurement resource blocks in the first time-frequency resource element. The pattern of the second time-frequency resource element indicates locations of the s2 measurement resource blocks in the second time-frequency resource element.

According to the foregoing design, the pattern of the repetition block may be determined based on both the pattern of the first time-frequency resource element and the pattern of the second time-frequency resource element, to improve flexibility of the repetition block, and reduce signaling overheads.

In a possible design, in the second time-frequency resource element, m2=n2=s2, and the s2 measurement resource blocks do not overlap in time domain or frequency domain.

In a possible design, the pattern of the first time-frequency resource element is determined based on a power change rate of the uplink interference signal in frequency domain and/or time domain.

According to the foregoing design, the network device may select an appropriate pattern of a first resource element and an appropriate pattern of a second resource element based on an uplink interference measurement result, to obtain patterns of an expected repetition block and an expected time-frequency resource. In this way, resource configuration optimization is implemented and resource overheads are further reduced.

In a possible design, the pattern indication information of the repetition block includes pattern indication information of the first time-frequency resource element and pattern indication information of the second time-frequency resource element. The pattern indication information of the first time-frequency resource element includes an index of the pattern of the first time-frequency resource element or a parameter used to determine the pattern of the first time-frequency resource element, and the pattern indication information of the second time-frequency resource element includes an index of the pattern of the second time-frequency resource element or a parameter used to determine the pattern of the second time-frequency resource element.

In a possible design, the pattern indication information of the RE for uplink interference measurement includes a symbol quantity, a start symbol offset, a subcarrier quantity, and a start subcarrier offset. Alternatively, the pattern indication information of the RE for uplink interference measurement includes a symbol quantity, a start symbol offset, a comb size, and a start subcarrier offset.

According to a second aspect, this application provides an uplink interference measurement method. The method includes:

A terminal device receives first information from a network device. The first information indicates at least one time-frequency resource. I time-frequency resources in the at least one time-frequency resource occupy M consecutive slots in time domain and occupy N consecutive resource blocks RBs in frequency domain. Each of the I time-frequency resources includes K measurement resource blocks, and each measurement resource block occupies one slot in time domain and occupies one RB in frequency domain. A quantity of resource elements REs for uplink interference measurement in each measurement resource block is less than a total quantity of REs included in each measurement resource block. M, N, K, and I are positive integers, and K≤M*N. The terminal device skips sending a signal on the resource element for uplink interference measurement in each measurement resource block.

According to the foregoing method, the terminal device skips sending the signal on the resource element for uplink interference measurement in each measurement resource block. The quantity of the resource elements for uplink interference measurement in each measurement resource block is less than the total quantity of the resource elements included in each measurement resource block. Therefore, resource overheads for uplink interference measurement can be greatly reduced by using the foregoing method.

In a possible design, the first information includes S pieces of indication information, each piece of indication information indicates one time-frequency resource, and the S pieces of indication information are in one-to-one correspondence with S time-frequency resources. S is a positive integer greater than or equal to 1, and when a value of S is greater than or equal to 2, the S time-frequency resources are different from each other. Alternatively, the at least one time-frequency resource is a periodic time-frequency resource, and the first information includes one piece of indication information and a periodicity. The piece of indication information indicates one time-frequency resource, and the periodicity is a periodicity of the time-frequency resource indicated by the piece of indication information.

In a possible design, in the I time-frequency resources, indication information corresponding to an i^{th} time-frequency resource includes at least one of the following: start slot indication information of the i^{th} time-frequency resource, start resource block indication information of the i^{th} time-frequency resource, pattern indication information of the i^{th} time-frequency resource, and pattern indication information of the RE for uplink interference measurement. A pattern of the i^{th} time-frequency resource is used to determine locations of the K measurement resource blocks in the i^{th} time-frequency resource, and a pattern of the RE for uplink interference measurement is used to determine a location of the RE for uplink interference measurement in the measurement resource block. i is any positive integer ranging from 1 to I.

In a possible design, in the I time-frequency resources, the pattern of the i^{th} time-frequency resource is determined based on a pattern of a repetition block in the i^{th} time-frequency resource, a quantity C1 of repetitions of the repetition block in time domain, and a quantity C2 of frequency-domain repetitions of the repetition block in frequency domain. The repetition block occupies m consecutive slots in time domain and occupies n consecutive RBs in frequency domain. The repetition block includes k measurement resource blocks. The pattern of the repetition block indicates locations of the k measurement resource blocks in the repetition block. C1, C2, m, n, and k are positive integers, k≤m*n, M=m*C1, N=n*C2, and K=k*C1*C2. i is any positive integer ranging from 1 to I.

In a possible design, the pattern indication information of the i^{th} time-frequency resource includes pattern indication information of the repetition block, the quantity C1 of the repetitions of the repetition block in time domain, and the quantity C2 of the repetitions of the repetition block in frequency domain.

In a possible design, the pattern indication information of the repetition block includes an index of the pattern of the repetition block, or a parameter used to determine the pattern of the repetition block.

In a possible design, the pattern of the repetition block is determined based on a pattern of a first time-frequency resource element and a pattern of a second time-frequency resource element. The first time-frequency resource element occupies m1 consecutive slots in time domain and occupies n1 consecutive RBs in frequency domain. The first time-frequency resource element includes s1 measurement resource blocks. The second time-frequency resource element occupies m2 consecutive slots in time domain and occupies n2 consecutive RBs in frequency domain. The second time-frequency resource element includes s2 measurement resource blocks. m1, m2, n1, n2, s1, and s2 are positive integers, k=s1*s2, m=m1*m2, and n=n1*n2. The pattern of the first time-frequency resource element indicates locations of the s1 measurement resource blocks in the first time-frequency resource element. The pattern of the second time-frequency resource element indicates locations of the s2 measurement resource blocks in the second time-frequency resource element.

In a possible design, in the second time-frequency resource element, m2=n2=s2, and the s2 measurement resource blocks do not overlap in time domain or frequency domain.

In a possible design, the pattern of the first time-frequency resource element is determined based on a power change rate of the uplink interference signal in frequency domain and/or time domain.

In a possible design, the pattern indication information of the repetition block includes pattern indication information of the first time-frequency resource element and pattern indication information of the second time-frequency resource element.

The pattern indication information of the first time-frequency resource element includes an index of the pattern of the first time-frequency resource element or a parameter used to determine the pattern of the first time-frequency resource element, and the pattern indication information of the second time-frequency resource element includes an index of the pattern of the second time-frequency resource element or a parameter used to determine the pattern of the second time-frequency resource element.

In a possible design, the pattern indication information of the RE for uplink interference measurement includes a symbol quantity, a start symbol offset, a subcarrier quantity, and a start subcarrier offset. Alternatively, the pattern indication information of the RE for uplink interference measurement includes a symbol quantity, a start symbol offset, a comb size, and a start subcarrier offset.

According to a third aspect, this application provides an uplink interference measurement apparatus. The apparatus includes:
a transceiver unit, configured to send first information to a terminal device, where the first information indicates at least one time-frequency resource, I time-frequency resources in the at least one time-frequency resource occupy M consecutive slots in time domain and occupy N consecutive resource blocks RBs in frequency domain, each of the I time-frequency resources includes K measurement resource blocks, each measurement resource block occupies one slot in time domain and occupies one RB in frequency domain, and a quantity of resource elements REs for uplink interference measurement in each measurement resource block is less than a total quantity of REs included in each measurement resource block, where M, N, K, and I are positive integers, and K≤M*N; and a processing unit, invoking the transceiver unit to measure an uplink interference signal on the resource element for uplink interference measurement in each measurement resource block.

In a possible design, the first information includes S pieces of indication information, each piece of indication information indicates one time-frequency resource, and the S pieces of indication information are in one-to-one correspondence with S time-frequency resources. S is a positive integer greater than or equal to 1, and when a value of S is greater than or equal to 2, the S time-frequency resources are different from each other. Alternatively, the at least one time-frequency resource is a periodic time-frequency resource, and the first information includes one piece of indication information and a periodicity. The piece of indication information indicates one time-frequency resource, and the periodicity is a periodicity of the time-frequency resource indicated by the piece of indication information.

In a possible design, in the I time-frequency resources, indication information corresponding to an i^{th} time-frequency resource includes at least one of the following: start slot indication information of the i^{th} time-frequency resource, start resource block indication information of the i^{th} time-frequency resource, pattern indication information of the i^{th} time-frequency resource, and pattern indication information of the RE for uplink interference measurement. A pattern of the i^{th} time-frequency resource is used to determine locations of the K measurement resource blocks in the i^{th} time-frequency resource, and a pattern of the RE for uplink interference measurement is used to determine a location of the RE for uplink interference measurement in the measurement resource block. i is any positive integer ranging from 1 to I.

In a possible design, in the I time-frequency resources, the pattern of the i^{th} time-frequency resource is determined based on a pattern of a repetition block in the i^{th} time-frequency resource, a quantity C1 of repetitions of the repetition block in time domain, and a quantity C2 of frequency-domain repetitions of the repetition block in frequency domain. The repetition block occupies m consecutive slots in time domain and occupies n consecutive RBs in frequency domain. The repetition block includes k measurement resource blocks. The pattern of the repetition block indicates locations of the k measurement resource blocks in the repetition block. C1, C2, m, n, and k are positive integers, k≤m*n, M=m*C1, N=n*C2, and K=k*C1*C2. i is any positive integer ranging from 1 to I.

In a possible design, the pattern indication information of the i^{th} time-frequency resource includes pattern indication information of the repetition block, the quantity C1 of the repetitions of the repetition block in time domain, and the quantity C2 of the repetitions of the repetition block in frequency domain.

In a possible design, the pattern indication information of the repetition block includes an index of the pattern of the repetition block, or a parameter used to determine the pattern of the repetition block.

In a possible design, the pattern of the repetition block is determined based on a pattern of a first time-frequency resource element and a pattern of a second time-frequency resource element. The first time-frequency resource element occupies m1 consecutive slots in time domain and occupies n1 consecutive RBs in frequency domain. The first time-frequency resource element includes s1 measurement resource blocks. The second time-frequency resource element occupies m2 consecutive slots in time domain and occupies n2 consecutive RBs in frequency domain. The second time-frequency resource element includes s2 measurement resource blocks. m1, m2, n1, n2, s1, and s2 are positive integers, k=s1*s2, m=m1*m2, and n=n1*n2. The pattern of the first time-frequency resource element indicates locations of the s1 measurement resource blocks in the first time-frequency resource element. The pattern of the second time-frequency resource element indicates locations of the s2 measurement resource blocks in the second time-frequency resource element.

In a possible design, in the second time-frequency resource element, m2=n2=s2, and the s2 measurement resource blocks do not overlap in time domain or frequency domain.

In a possible design, the pattern of the first time-frequency resource element is determined based on a power change rate of the uplink interference signal in frequency domain and/or time domain.

In a possible design, the pattern indication information of the repetition block includes pattern indication information of the first time-frequency resource element and pattern indication information of the second time-frequency resource element.

The pattern indication information of the first time-frequency resource element includes an index of the pattern of the first time-frequency resource element or a parameter used to determine the pattern of the first time-frequency resource element, and the pattern indication information of the second time-frequency resource element includes an index of the pattern of the second time-frequency resource element or a parameter used to determine the pattern of the second time-frequency resource element.

In a possible design, the pattern indication information of the RE for uplink interference measurement includes a symbol quantity, a start symbol offset, a subcarrier quantity, and a start subcarrier offset. Alternatively, the pattern indication information of the RE for uplink interference measurement includes a symbol quantity, a start symbol offset, a comb size, and a start subcarrier offset.

According to a fourth aspect, this application provides an uplink interference measurement apparatus. The apparatus includes:
a transceiver unit, configured to receive first information from a network device, where the first information indicates at least one time-frequency resource, I time-frequency resources in the at least one time-frequency resource occupy M consecutive slots in time domain and occupy N consecutive resource blocks RBs in frequency domain, each of the I time-frequency resources includes K measurement resource blocks, each measurement resource block occupies one slot in time domain and occupies one RB in frequency domain, and a quantity of resource elements REs for uplink interference measurement in each measurement resource block is less than a total quantity of REs included in each measurement resource block, where M, N, K, and I are positive integers, K≤M*N, and an i^{th} time-frequency resource is any one of the at least one time-frequency resource; and
a processing unit, configured to determine not to send a signal on the resource element for uplink interference measurement in each measurement resource block.

In a possible design, the first information includes S pieces of indication information, each piece of indication information indicates one time-frequency resource, and the S pieces of indication information are in one-to-one correspondence with S time-frequency resources. S is a positive integer greater than or equal to 1, and when a value of S is greater than or equal to 2, the S time-frequency resources are different from each other. Alternatively, the at least one time-frequency resource is a periodic time-frequency resource, and the first information includes one piece of indication information and a periodicity. The piece of indication information indicates one time-frequency resource, and the periodicity is a periodicity of the time-frequency resource indicated by the piece of indication information.

In a possible design, in the I time-frequency resources, indication information corresponding to an i^{th} time-frequency resource includes at least one of the following: start slot indication information of the i^{th} time-frequency resource, start resource block indication information of the i^{th} time-frequency resource, pattern indication information of the i^{th} time-frequency resource, and pattern indication information of the RE for uplink interference measurement. A pattern of the i^{th} time-frequency resource is used to determine locations of the K measurement resource blocks in the i^{th} time-frequency resource, and a pattern of the RE for uplink interference measurement is used to determine a location of the RE for uplink interference measurement in the measurement resource block. i is any positive integer ranging from 1 to I.

In a possible design, in the I time-frequency resources, the pattern of the i^{th} time-frequency resource is determined based on a pattern of a repetition block in the i^{th} time-frequency resource, a quantity C1 of repetitions of the repetition block in time domain, and a quantity C2 of frequency-domain repetitions of the repetition block in frequency domain. The repetition block occupies m consecutive slots in time domain and occupies n consecutive RBs in frequency domain. The repetition block includes k measurement resource blocks. The pattern of the repetition block indicates locations of the k measurement resource blocks in the repetition block. C1, C2, m, n, and k are positive integers, k≤m*n, M=m*C1, N=n*C2, and K=k*C1*C2. i is any positive integer ranging from 1 to I.

In a possible design, the pattern indication information of the i^{th} time-frequency resource includes pattern indication information of the repetition block, the quantity C1 of the repetitions of the repetition block in time domain, and the quantity C2 of the repetitions of the repetition block in frequency domain.

In a possible design, the pattern indication information of the repetition block includes an index of the pattern of the repetition block, or a parameter used to determine the pattern of the repetition block.

In a possible design, the pattern of the repetition block is determined based on a pattern of a first time-frequency resource element and a pattern of a second time-frequency resource element. The first time-frequency resource element occupies m1 consecutive slots in time domain and occupies n1 consecutive RBs in frequency domain. The first time-frequency resource element includes s1 measurement resource blocks. The second time-frequency resource element occupies m2 consecutive slots in time domain and occupies n2 consecutive RBs in frequency domain. The second time-frequency resource element includes s2 measurement resource blocks. m1, m2, n1, n2, s1, and s2 are positive integers, k=s1*s2, m=ml *m2, and n=n1*n2. The pattern of the first time-frequency resource element indicates locations of the s1 measurement resource blocks in the first time-frequency resource element. The pattern of the second time-frequency resource element indicates locations of the s2 measurement resource blocks in the second time-frequency resource element.

In a possible design, in the second time-frequency resource element, m2=n2=s2, and the s2 measurement resource blocks do not overlap in time domain or frequency domain.

In a possible design, the pattern of the first time-frequency resource element is determined based on a power change rate of the uplink interference signal in frequency domain and/or time domain.

In a possible design, the pattern indication information of the repetition block includes pattern indication information of the first time-frequency resource element and pattern indication information of the second time-frequency resource element.

The pattern indication information of the first time-frequency resource element includes an index of the pattern of the first time-frequency resource element or a parameter used to determine the pattern of the first time-frequency resource element, and the pattern indication information of the second time-frequency resource element includes an index of the pattern of the second time-frequency resource element or a parameter used to determine the pattern of the second time-frequency resource element.

In a possible design, the pattern indication information of the RE for uplink interference measurement includes a symbol quantity, a start symbol offset, a subcarrier quantity, and a start subcarrier offset. Alternatively, the pattern indication information of the RE for uplink interference measurement includes a symbol quantity, a start symbol offset, a comb size, and a start subcarrier offset.

According to a fifth aspect, this application provides a communication apparatus. The apparatus may be used in a terminal device or a network device, and the apparatus includes units configured to perform the method according to any one of the foregoing aspects.

According to a sixth aspect, this application provides a communication device, including at least one processing element and at least one storage element. The at least one storage element is configured to store a program and data. The at least one processing element is configured to read and execute the program and the data that are stored in the storage element, to implement the method provided in any one of the foregoing aspects of this application.

According to a seventh aspect, this application further provides a computer program. When the computer program runs on a computer, to cause the computer to perform the method according to any one of the foregoing aspects.

According to an eighth aspect, this application provides a communication apparatus. The apparatus includes an interface circuit. The interface circuit is configured to provide a program or input and/or output of instructions for at least one processor. The at least one processor is configured to execute the program or the instructions, to cause the communication apparatus to implement the method according to any one of the foregoing aspects.

In a possible manner, the communication apparatus includes the at least one processor.

According to a ninth aspect, this application provides a computer storage medium. The storage medium stores a software program, and when the software program is read and executed by one or more processors, the method according to any one of the foregoing aspects may be implemented.

According to a tenth aspect, this application provides a computer program product including instructions. When the instructions are run on a computer, the computer is caused to perform the method in any one of the foregoing aspects.

According to an eleventh aspect, a chip system is provided. The chip system includes at least one chip and a memory. The at least one chip is configured to read and execute a program stored in the memory, to implement the method according to any one of the first aspect.

According to a twelfth aspect, a communication system is provided. The system includes at least one terminal and a network device. The terminal performs the method according to any one of the second aspect, and the network device performs the method according to any one of the first aspect.

In this application, based on the implementations provided in the foregoing aspects, the implementations may be further combined to provide more implementations.

### BRIEF DESCRIPTION OF DRAWINGS

FIG. 1 is a diagram of an architecture of a mobile communication system to which an embodiment of this application is applied;
FIG. 2 is a diagram of a typical scenario in which an NTN network provides user equipment access according to this application;
FIG. 3 is a diagram of another typical scenario in which an NTN network provides user equipment access according to this application;
FIG. 4 is a diagram of downlink interference according to this application;
FIG. 5 is a diagram of uplink interference according to this application;
FIG. 6 is a diagram of an interference scenario between a LEO satellite and a terrestrial cellular network according to this application;
FIG. 7 is a diagram of an interference scenario between a low-earth orbit satellite and a high-earth orbit satellite according to this application;
FIG. 8 is a diagram of a frame structure according to this application;
FIG. 9 is a possible schematic flowchart of an uplink interference measurement method according to this application;
FIG. 10 is a diagram of a pattern of an RE for uplink interference measurement according to this application;
FIG. 11 is a diagram of another pattern of an RE for uplink interference measurement according to this application;
FIG. 12 is a diagram of a pattern of an i^{th} time-frequency resource according to this application;
FIG. 13 is a diagram of another pattern of an i^{th} time-frequency resource according to this application;
FIG. 14 is a diagram of a pattern of a first time-frequency resource element according to this application;
FIG. 15 is a diagram of a pattern of a second time-frequency resource element according to this application;
FIG. 16 is a diagram of a pattern of a time-frequency resource shown in Example a according to this application;
FIG. 17 is a diagram of a pattern of a time-frequency resource shown in Example b according to this application;
FIG. 18 is a diagram of a pattern of a time-frequency resource shown in Example c according to this application;
FIG. 19 is a diagram of a pattern of a time-frequency resource shown in Example d according to this application;
FIG. 20 is a diagram of a pattern of a time-frequency resource shown in Example e in this application;
FIG. 21 is a diagram of a structure of a communication apparatus according to this application; and
FIG. 22 is a diagram of a structure of another communication apparatus according to this application.

### DESCRIPTION OF EMBODIMENTS

The technical solutions in embodiments of this application may be applied to various communication systems, for example, a long term evolution (long term evolution, LTE) system, a 5G system or new radio (new radio, NR), a non-terrestrial network (non-terrestrial network, NTN), and a future communication system like a 6th generation mobile communication system. This is not limited in this application.

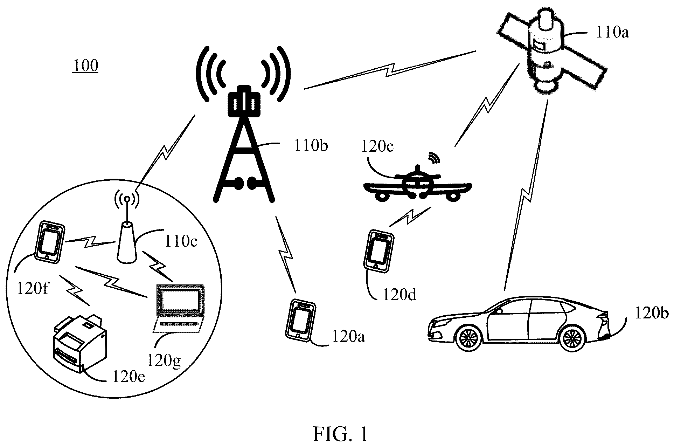

FIG. 1 is a diagram of an architecture of a communication system 100 applicable to an embodiment of this application. As shown in FIG. 1, the communication system 100 may include at least one access network device (for example, 110a, 110b, and 110c in FIG. 1), and may further include at least one terminal device (for example, 120a to 120g in FIG. 1). Access network devices may be connected to each other in a wired or wireless manner. FIG. 1 is merely a diagram. The communication system may further include another network device, for example, may further include a wireless relay device and a wireless backhaul device.

A network device provided in embodiments of this application may be an access network device, for example, a base station (base station), a NodeB (NodeB), an evolved NodeB (evolved NodeB, eNodeB or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN or open RAN), a next generation base station in a 6th generation (6th generation, 6G) mobile communication system, a base station in a future mobile communication system, or an access node in a wireless fidelity (wireless fidelity, Wi-Fi) system. Alternatively, the network device may be a module or a unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The network device may be a satellite (for example, 110a in FIG. 1) or may be a macro base station (for example, 110b in FIG. 1). Alternatively, the access network device may be a micro base station or an indoor base station (for example, 110c in FIG. 1), or may be a relay node, a donor node, or the like. A specific technology and a specific device form that are used by the access network device are not limited in this application. For ease of description, the following uses an example in which the network device serves as an access network device for description.

The terminal device provided in embodiments of this application may also be referred to as a terminal, and includes but is not limited to user equipment (user equipment, UE), a mobile station, a mobile terminal, or the like. The terminal device may be widely used in various scenarios for communication. For example, the scenarios includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D), vehicle to everything (vehicle to everything, V2X), machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, or a smart city. The terminal device may be a mobile phone (for example, mobile phones 120a, 120d, and 120f in FIG. 1), a tablet computer, a computer (for example, a computer 120g in FIG. 1) having a wireless transceiver function, a wearable device, a vehicle (for example, 120b in FIG. 1), an uncrewed aerial vehicle, a helicopter, an airplane (for example, 120c in FIG. 1), a ship, a robot, a mechanical arm, a smart home device (for example, a printer 120e in FIG. 1), or the like. A specific technology and a specific device form used by the terminal device are not limited in this application.

The network device and/or the terminal device may be at fixed positions, or may be movable. The network device and/or the terminal device may be deployed terrestrially, including an indoor device, an outdoor device, a handheld device, or a vehicle-mounted device; may be deployed on water; or may be deployed on an airplane, a balloon, or an artificial satellite in the air. An environment/scenario at which the network device and the terminal device are located is not limited in this application. The network device and the terminal device may be deployed in a same environment/scenario or different environments/scenarios. For example, the network device and the terminal device are both deployed terrestrially. Alternatively, the network device is deployed terrestrially, and the terminal device is deployed on water. Examples are not enumerated.

The following first explains and describes some terms in embodiments of this application, to facilitate understanding of a person skilled in the art.

### I. NTN

The NTN refers to a network that uses radio frequency resources on a satellite (or an unmanned aircraft system (unmanned aircraft system, UAS) platform, or a high altitude communication platform (high altitude platform station, HAPS)). In comparison with a terrestrial cellular network (for example, a 5th generation mobile communication technology (5th generation mobile communication technology, 5G)), the NTN network has characteristics of wide coverage, a low delay, broadbandization, and low costs. As a supplement and extension of the terrestrial cellular network, the NTN network can implement wide-area seamless coverage that cannot be implemented by a wired telephone network and a terrestrial mobile communication network, to effectively resolve an internet access problem in an area with insufficient communication infrastructure. A large quantity of satellites are deployed in a near-earth orbit, and a round-trip transmission delay of data between a satellite and a terrestrial terminal device is greatly reduced to a low delay of dozens of milliseconds. Use of technologies such as a high band, a multi-spot beam, and frequency reuse significantly improves a communication capability of the satellite, reduces unit broadband costs, and meets a requirement of a high information rate service. In comparison with communication infrastructure such as terrestrial cellular base stations and submarine optical fibers and cables, the NTN has a significant cost advantage. Development and manufacturing costs of a modern small satellite are low, and a software-defined technology can further prolong a service life of a satellite in orbit. The NTN network may be used in scenarios such as global coverage (for example, a remote area and an ocean-going ship), emergency response and disaster relief (for example, disaster monitoring and emergency communication), an internet of everything, and high-speed movement (for example, a high-speed railway and an airplane).

The 3rd Generation Partnership Project (3rd generation partnership project, 3GPP) has started research on satellite-terrestrial convergence since R14. In TS 22.261, a role and advantages of a satellite in a 5G system are discussed, and it is specified for the first time that 5G supports satellite access. In R15, the first technical report TR 38.811 about 5G and satellite convergence is formulated, which defines eight eMBB scenarios and two massive internet of things communication (massive machine-type communication, mMTC) scenarios, and defines an NTN channel model. In R16, an architecture and a solution for NR supporting the NTN are further researched in TR 38.821. Based on research results of R16, R17 initiates standardization of 5G new radio supporting the NTN, and the first version of convergence technical specifications is formulated. R18 is to continue research on NTN enhancement.

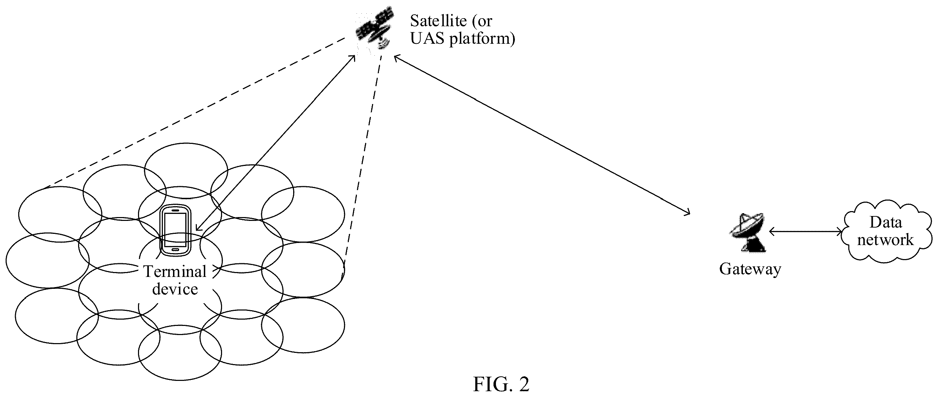

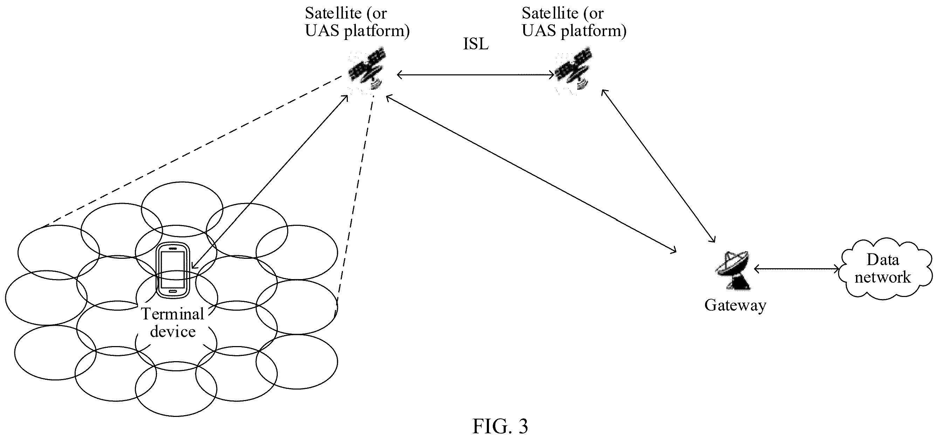

Typical scenarios in which the NTN network provides user equipment access include a transparent payload (transparent payload) and a regenerative payload (regenerative payload). In the transparent payload scenario, there is no processing such as baseband demodulation or decoding on the satellite. Therefore, as shown in FIG. 2, a signal waveform remains unchanged and is repeated. In the regenerative payload scenario, as shown in FIG. 3, the satellite (or the UAS platform) has all or some of functions of a base station (for example, a gNB). It should be noted that FIG. 2 and FIG. 3 are merely examples of NTN scenarios, and the NTN scenarios may further include another specific scenario. This is not limited in this application.

The NTN network generally has the following elements:
1. one or more gateways (gateways) that connect the NTN network and a public data network;
2. a feeder link: a radio link between a gateway and a satellite (or a UAS platform);
3. a service link: a radio link between a terminal device and a satellite (or a UAS platform);
4. a satellite (or a UAS platform) that can implement the transparent payload and the regenerative payload;
5. whether there is an inter-satellite link (inter-satellite link, ISL) between satellite constellations, which is optional, where if there is the inter-satellite link, the satellite implements the regenerative payload, and the ISL may operate at a radio frequency (radio frequency, RF) or in an optical band; and
6. a terminal device being served by a satellite (or a UAS platform) in a target service area.

### II. Satellite spectrum

Satellite communication operates in a microwave band, and a frequency range of the microwave band is 1 GHz to 40 GHz. Bands can be divided into L, S, C, X, Ku, K, and Ka bands. Different bands are used for different purposes. The K band is located in a frequency window with a greatest atmospheric absorption loss, and is not suitable for satellite communication. Therefore, common satellite communication bands are the L, S, C, X, Ku, and Ka bands.

The L and S bands are used for satellite mobile communication, namely, a common handheld satellite phone. The C band has a lower frequency. Therefore, signal coverage is wide and a signal is less vulnerable to the weather. The C band is usually used for government/enterprise private network communication, an international private line, and content distribution of a TV station, and the like. The X band is a controlled band and is usually used by government and military departments, and is not used for civilian commercial purposes. The Ku band has a higher frequency and is prone to signal fluctuation caused by an antenna. However, a signal strength of the Ku band is higher than that of the C band. Therefore, a diameter of a terrestrial receive antenna is smaller. Generally, the diameter can be as small as 0.35 m. The Ku band is very suitable for satellite TV live broadcasting to home. The Ka band emerges and is put into use in recent years. Because the C and Ku bands are nearly saturated and cannot carry more services, the Ka band with a higher frequency is searched for.

A higher band indicates more bandwidth resources and a larger service capacity that can be supported. In recent years, with a surge of satellite internet access requirements, people start to turn their attention to the Ka band with a higher frequency. Although the Ka band is more vulnerable to weather in comparison with the Ku band, the Ka band has a larger operating bandwidth, a higher signal strength, and a smaller antenna diameter, and is more valuable for development. Table 1 lists the common satellite communication bands and main purposes thereof.

**Table 1**

| Band | Range | Purpose |
|---|---|---|
| L | 1-2 GHz | Mainly used for satellite mobile communication, satellite radio-determination, a satellite telemetry tracking and command link, and the like |
| S | 2-4 GHz | |
| C | 4-7 GHz | Mainly used for fixed satellite service communication, and nearly saturated |
| X | 7-12 GHz | Mainly used for fixed satellite service communication, and generally occupied by governments and militaries |
| Ku | 12-18 GHz | Mainly used for fixed satellite service communication, and nearly saturated |
| Ka | 27-40 GHz | Being extensively applied for |

For a frequency range (frequency range, FR) 1, a frequency range and a band (band) number of the NTN are shown in Table 2.

**Table 2 3GPP NTN bands (FR1)**

| Satellite operating band (satellite operating band) | Uplink operating band (uplink operating band) | Downlink operating band (downlink operating band) | Duplex mode (duplex mode) |
|---|---|---|---|
| n256 | 1980-2010 MHz | 2170-2200 MHz | FDD |
| n255 | 1626.5-1660.5 MHz | 1525-1559 MHz | FDD |

For a band above 10 GHz, a frequency range and a band number of the NTN are shown in Table 3.

**Table 3 3GPP NTN bands (FR2)**

| NTN operating band (operating band) | UL | DL |
|---|---|---|
| n512 | 27.5-30.0 GHz | 17.3-20.2 GHz |
| n511 | 28.35-30.0 GHz | 17.3-20.2 GHz |
| n510 | 27.5-28.35 GHz | 17.3-20.2 GHz |

### III. Inter-system interference

The inter-system interference may be classified into downlink interference and uplink interference based on a signal direction.

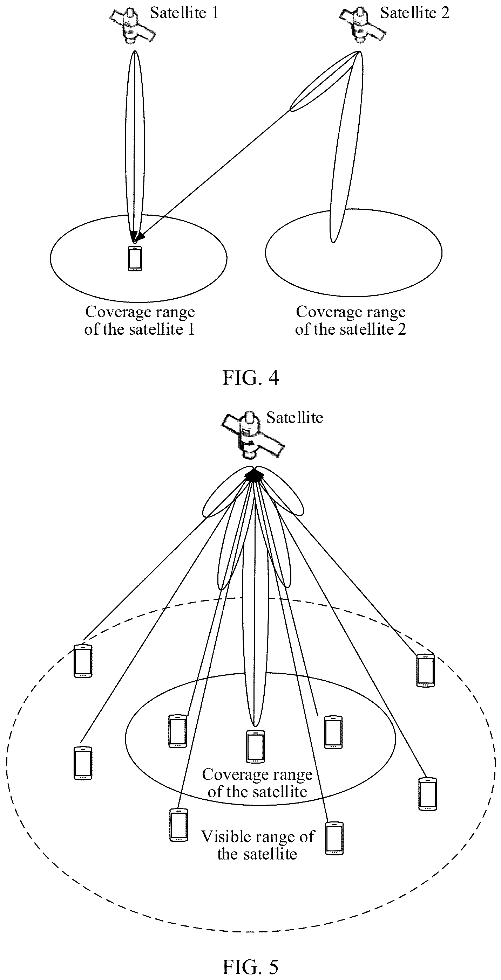

The downlink interference has the following characteristics:
1. There are a small quantity of interference sources. An example in which a low-earth orbit satellite interferes with a terrestrial terminal device is used. As shown in FIG. 4, a main interference source is a satellite 1 that covers the terminal device. Interference from a satellite 2 to the terminal device mainly is from a side lobe, and a path loss is greater. Therefore, an interference level is lower.
2. A terrestrial base station or a low-earth orbit satellite is closer to a terminal device. Therefore, the interference is stronger.

The uplink interference has the following characteristics:
1. There are a large quantity of interference sources. An example in which a terrestrial terminal device interferes with a low-earth orbit satellite is used. As shown in FIG. 5, interference sources are all terrestrial terminal devices in a visible range of the satellite.
2. Aggregate interference is strong. A main interference source is a terminal device near a main lobe of a satellite beam. In this case, a satellite receive gain is large.
3. The uplink interference is in a beam level. In a single-satellite multi-beam scenario, interference to the satellite varies in different beam directions.
4. There is a frequency selective characteristic. An interference signal exhibits different characteristics in different bands.
5. There is a time-varying characteristic. An interference signal exhibits different characteristics at different moments.

Inter-system interference may be classified into satellite-terrestrial interference and high-and-low orbit interference based on interference scenarios.

### (1) Satellite-terrestrial interference

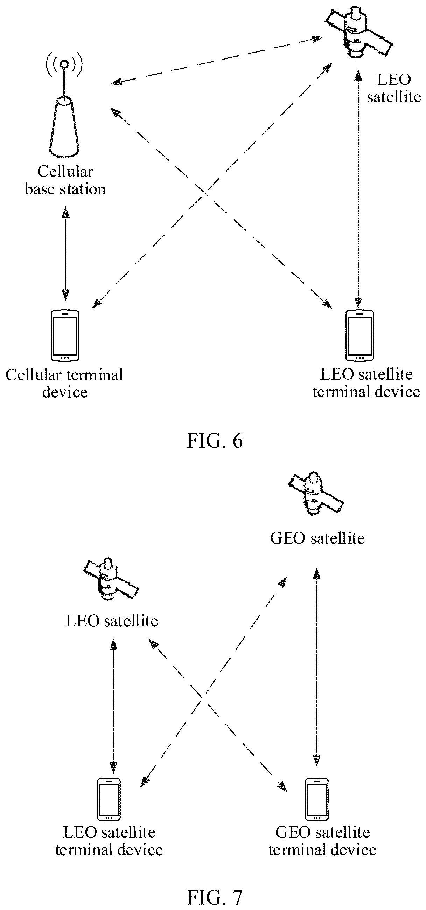

Because there are a large quantity of base stations and terminal devices in a terrestrial cellular network, a LEO satellite is close to the ground, and a path loss is small, interference is easily generated between the LEO satellite and the terrestrial cellular network. FIG. 6 shows an interference scenario between a LEO satellite and a terrestrial cellular network. A solid line segment represents a valid signal, a dashed line segment represents an interference signal, and an arrow represents a signal direction.

As shown in Table 4, interference may be classified into the following six types.

**Table 4 Classification of satellite-terrestrial interference**

| Interfered party | Interfering party | Interference source |
|---|---|---|
| Cellular base station | LEO satellite | Satellite power leakage (base station antenna uptilt) |
| | LEO satellite terminal | Terminal power leakage |
| Cellular terminal | LEO satellite | Satellite power leakage |
| LEO satellite | Cellular base station | Base station power leakage (base station antenna uptilt) |
| | Cellular terminal | Terminal power leakage |
| LEO satellite terminal | Cellular base station | Base station power leakage |

### (2) High-and-low orbit interference

A coverage area of a high-earth orbit satellite is large, and a coverage range of a low-earth orbit satellite overlaps with that of the high-earth orbit satellite. Because a path loss of the low-earth orbit satellite is smaller, interference is easily generated between the high-earth orbit satellite and the low-earth orbit satellite. FIG. 7 shows an interference scenario between a low-earth orbit satellite and a high-earth orbit satellite. A solid line segment represents a valid signal, a dashed line segment represents an interference signal, and an arrow represents a signal direction.

As shown in Table 5, interference may be classified into the following four types.

**Table 5 High-and-low orbit interference classification**

| Interfered party | Interfering party | Interference source |
|---|---|---|
| LEO satellite | GEO satellite terminal | Terminal power leakage |
| GEO satellite | LEO satellite terminal | Terminal power leakage |
| LEO satellite terminal | GEO satellite | Satellite power leakage |
| GEO satellite terminal | LEO satellite | Satellite power leakage |

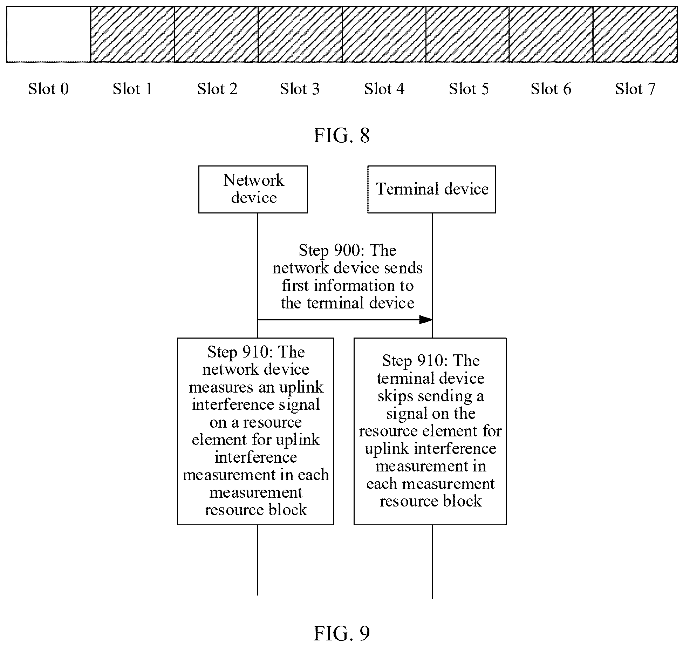

Currently, to measure uplink interference, a frame structure is designed as shown in FIG. 8. A slot 0 is used to measure the uplink interference. In other words, in this slot, a satellite terminal does not send a signal, and a satellite base station receives an interference signal. A slot 1 to a slot 7 are used to transmit a signal. In other words, the satellite terminal sends a signal, and the satellite base station receives the signal and filters out an interference signal, to form a valid signal. The slot 0 occupies all frequency domain resources in this period of time, causing a severe resource waste. FIG. 7 is used as an example. Assuming that all the frequency domain resources in the slot 1 to the slot 7 are used for data scheduling, 1/8 ≈ 12.5% of time-frequency domain resources are wasted.

Based on the network system architecture shown in FIG. 1 and content of the related technologies, embodiments of this application provide an uplink interference measurement method. A network device and a terminal device are used as examples of execution entities of methods. For example, the network device may be 110a, 110b, or 110c in FIG. 1. The terminal device may be 120a to 120g in FIG. 1. In addition, it should be understood that the network device may be replaced with a communication apparatus having a network device function, or a chip, a unit, or a module in the communication apparatus having the network device function. The terminal device may be replaced with a communication apparatus having a terminal device function, or a chip, a unit, or a module in the communication apparatus having the terminal device function. It may be understood that a specific structure of an execution entity of the method provided in embodiments of this application is not particularly limited in this application, provided that a program that records code of the method provided in embodiments of this application can be run to perform communication according to the method provided in embodiments of this application. The following uses interaction between the terminal device and the network device as an example for description.

In this application, names of messages and resources in the following procedures are merely used as examples. With evolution of communication technologies, the names of the messages and the resources in the following procedures may change. However, regardless of how the names change, the messages fall within the protection scope of this application, provided that meanings of the messages are the same as functions or meanings of the messages in this application. A sequence of steps in the following procedures is merely an example. During actual application, the sequence of the steps in the procedures may be adjusted.

FIG. 9 shows an example of a possible schematic flowchart of an uplink interference measurement method according to an embodiment of this application. As shown in FIG. 9, the method includes the following steps.

Step 900: A network device sends first information to a terminal device. Correspondingly, the terminal device receives the first information from the network device.

For example, the first information indicates at least one time-frequency resource, and I time-frequency resources in the at least one time-frequency resource occupy M consecutive slots in time domain and occupy N consecutive resource blocks (resource blocks, RBs) in frequency domain. Each of the I time-frequency resources includes K measurement resource blocks, and each measurement resource block occupies one slot in time domain and occupies one RB in frequency domain. A quantity of resource elements (resource elements, REs) for uplink interference measurement in each measurement resource block is less than a total quantity of REs included in each measurement resource block. M, N, K, and I are positive integers, and K≤M*N.

Step 910: The network device measures an uplink interference signal on the resource element for uplink interference measurement in each measurement resource block. Correspondingly, the terminal device skips sending a signal on the resource element for uplink interference measurement in each measurement resource block.

It may be understood that the terminal device may send a signal to the network device on a resource element other than the resource element for uplink interference measurement in each measurement resource block, so that the network device may process, based on related information about the uplink interference signal measured on the resource element for uplink interference measurement in each measurement resource block, the signal received on the resource element other than the resource element for uplink interference measurement in each measurement resource block, to obtain a valid uplink signal.

According to the foregoing method, the network device measures the uplink interference signal on the resource element for uplink interference measurement in each measurement resource block. The quantity of the resource elements for uplink interference measurement in each measurement resource block is less than the total quantity of the resource elements included in each measurement resource block. Therefore, resource overheads for uplink interference measurement can be greatly reduced by using the foregoing method.

In a possible implementation, the first information includes S pieces of indication information, and the S pieces of indication information are in one-to-one correspondence with S time-frequency resources. S is a positive integer greater than or equal to 1, and when a value of S is greater than or equal to 2, the S time-frequency resources are different from each other. In other words, the first information may indicate the S time-frequency resources, and the value of S may be 1, or the value of S may be greater than or equal to 2. When the value of S is greater than or equal to 2, the S time-frequency resources are different from each other, that is, the S pieces of indication information may be different from each other. In this case, a quantity of the at least one time-frequency resource is S. For example, the at least one time-frequency resource may be an aperiodic time-frequency resource. The network device may independently configure the at least one time-frequency resource, and generate one piece of indication information for each time-frequency resource.

In another possible implementation, the first information includes one piece of indication information and a periodicity. The piece of indication information indicates one time-frequency resource, and the periodicity is a periodicity of the time-frequency resource indicated by the piece of indication information. In other words, the first information may indicate one time-frequency resource and a periodicity of the time-frequency resource, that is, the at least one time-frequency resource is a periodic time-frequency resource.

In addition, the first information may alternatively indicate the at least one time-frequency resource in another manner. This is not limited in this application.

The following uses only an i^{th} time-frequency resource and indication information corresponding to the i^{th} time-frequency resource as an example for description. The i^{th} time-frequency resource is any one of the I time-frequency resources, and i is any positive integer ranging from 1 to I.

It may be understood that if the first information includes the S pieces of indication information, the indication information corresponding to the i^{th} time-frequency resource is one of the S pieces of indication information. If the quantity of the at least one time-frequency resource indicated by the first information is different from a value of I, a specific form of a time-frequency resource other than the I time-frequency resources in the at least one time-frequency resource, and a specific implementation of the corresponding indication information are not limited in this application. If the quantity of the at least one time-frequency resource indicated by the first information is the same as the value of I, a specific implementation of the indication information corresponding to the i^{th} time-frequency resource is similar to a specific implementation of indication information other than the indication information corresponding to the i^{th} time-frequency resource, and mutual reference may be made.

If the first information includes one piece of indication information and the periodicity, the i^{th} time-frequency resource may be a time-frequency resource indicated by the indication information or a time-frequency resource corresponding to any periodicity, the at least one time-frequency resource indicated by the first information is the I time-frequency resources, and the quantity of the at least one time-frequency resource is the same as the value of I. If the time-frequency resource indicated by the piece of indication information is the i^{th} time-frequency resource, the piece of indication information is the indication information corresponding to the i^{th} time-frequency resource.

Unless otherwise specified, for a specific implementation of the indication information in this application, refer to the following implementation of the indication information corresponding to the i^{th} time-frequency resource.

In a possible implementation, in the I time-frequency resources, the indication information corresponding to the i^{th} time-frequency resource may include at least one of the following: start slot indication information of the i^{th} time-frequency resource, start resource block indication information of the i^{th} time-frequency resource, pattern indication information of the RE for uplink interference measurement, and pattern indication information of the i^{th} time-frequency resource. i is any positive integer ranging from 1 to I.

The following describes possible implementations of the foregoing information.
(1) Start slot indication information of the i^{th} time-frequency resource and start resource block indication information of the i^{th} time-frequency resource

For example, the start slot indication information of the i^{th} time-frequency resource may include an index of a start slot of the i^{th} time-frequency resource, and the start resource block indication information of the i^{th} time-frequency resource may include an index of a start resource block of the i^{th} time-frequency resource.

It may be understood that if the first information includes the S pieces of indication information, and the start slot indication information of the i^{th} time-frequency resource is different from start slot indication information of a p^{th} time-frequency resource, the start resource block indication information of the i^{th} time-frequency resource may be the same as or different from start resource block indication information of the p^{th} time-frequency resource. Both the i^{th} time-frequency resource and the p^{th} time-frequency resource belong to S time-frequency domain resources, and p is a positive integer. In addition, the pattern indication information of the RE for uplink interference measurement in the indication information corresponding to the i^{th} time-frequency resource may be the same as or different from pattern indication information of an RE for uplink interference measurement in the p^{th} time-frequency resource. The pattern indication information of the i^{th} time-frequency resource in the indication information corresponding to the i^{th} time-frequency resource may be the same as or different from pattern indication information of the p^{th} time-frequency resource in the p^{th} time-frequency resource.

### (2) Pattern indication information of the RE for uplink interference measurement

For example, a pattern of the RE for uplink interference measurement is used to determine a location of the RE for uplink interference measurement in a measurement resource block. In an example, the pattern indication information of the RE for uplink interference measurement includes a symbol quantity, a start symbol offset, a subcarrier quantity, and a start subcarrier offset. The symbol quantity is a quantity of symbols occupied by the RE for uplink interference measurement in one slot, and the subcarrier quantity is a quantity of subcarriers occupied by the RE for uplink interference measurement in 12 consecutive subcarriers included in one RB. The quantity of the REs for uplink interference measurement is a product of the symbol quantity and the subcarrier quantity. The start symbol offset is an offset of a start symbol on which the RE for uplink interference measurement is located. For example, the start symbol offset is an offset of the start symbol on which the RE for uplink interference measurement is located relative to a symbol 0 or a symbol 13. In this application, only the symbol 0 is used as an example for description. The start subcarrier offset is an offset of a start subcarrier on which the RE for uplink interference measurement is located. For example, the start subcarrier offset is an offset of the start subcarrier on which the RE for uplink interference measurement is located relative to a subcarrier 0 or a subcarrier 11. In this application, only the subcarrier 0 is used as an example for description.

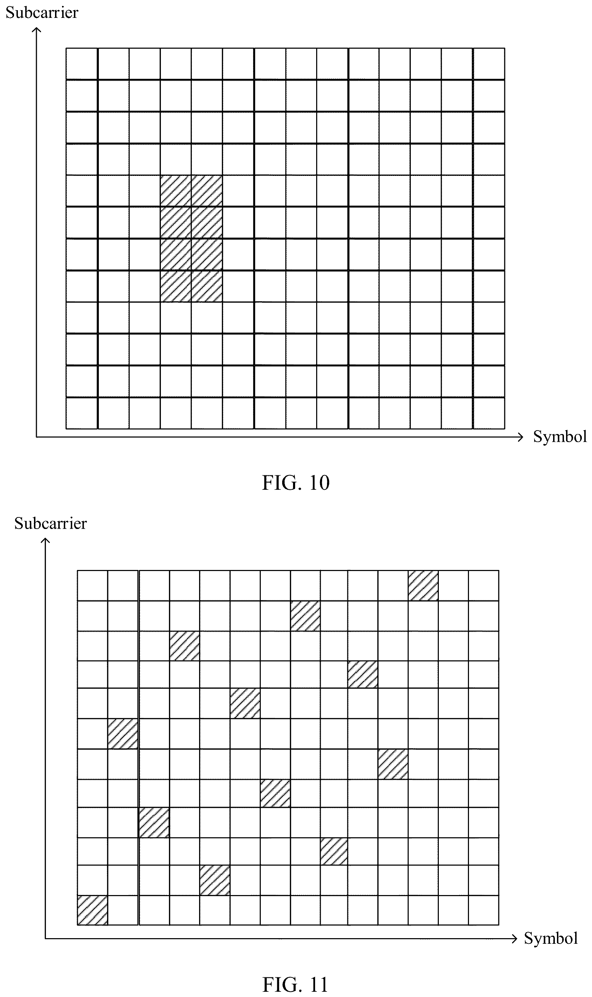

For example, assuming that the pattern indication information of the RE for uplink interference measurement includes the symbol quantity symb_num=2, the start symbol offset symb_start=3, the subcarrier quantity subc_num=4, and the start subcarrier offset subc_start=4, the pattern of the RE for uplink interference measurement is shown in FIG. 10. In FIG. 10, a horizontal axis represents a symbol, and a vertical axis represents a subcarrier. Because each measurement resource block occupies one slot in time domain and occupies one RB in frequency domain, each measurement resource block occupies 14 consecutive symbols, and occupies 12 consecutive subcarriers. Based on the symbol quantity symb_num=2 and the subcarrier quantity subc_num=4, it may be learned that the quantity of the REs for uplink interference measurement is 2*4=8. Specific locations of the eight REs for uplink interference measurement may be determined based on the start symbol offset symb_start=3 and the start subcarrier offset subc_start=4.

In another example, the pattern indication information of the RE for uplink interference measurement includes a symbol quantity, a start symbol offset, a comb size, and a start subcarrier offset. For the symbol quantity, the start symbol offset, and the start subcarrier offset, refer to the foregoing related descriptions. Details are not described herein again. The quantity of the REs for uplink interference measurement is determined based on the symbol quantity and the comb size.

For example, assuming that the pattern indication information of the RE for uplink interference measurement includes the symbol quantity symb_num=12, the start symbol offset symb_start=0, the comb size comb_size=12, and the start subcarrier offset subc_start=0, the pattern of the RE for uplink interference measurement is shown in FIG. 11. In FIG. 11, a horizontal axis represents a symbol, and a vertical axis represents a subcarrier. Because each measurement resource block occupies one slot in time domain and occupies one RB in frequency domain, each measurement resource block occupies 14 consecutive symbols, and occupies 12 consecutive subcarriers. In FIG. 11, based on the symbol quantity symb_num=12 and the comb size comb_size=12, it may be learned that the quantity of the REs for uplink interference measurement is 12, and specific locations of the 12 REs for uplink interference measurement may be determined based on the start symbol offset symb_start=0, the start subcarrier offset subc_start=0, and the comb size comb_size=12.

### (3) Pattern indication information of the i^{th} time-frequency resource

For example, the pattern of the i^{th} time-frequency resource is used to determine locations of the K measurement resource blocks in the i^{th} time-frequency resource. Specific content included in the pattern indication information of the i^{th} time-frequency resource depends on a manner of determining the pattern of the i^{th} time-frequency resource.

Manner 1: If the pattern of the i^{th} time-frequency resource is preconfigured by the network device for the terminal device, the pattern indication information of the i^{th} time-frequency resource includes an index of the pattern of the i^{th} time-frequency resource.

For example, the network device preconfigures patterns of W time-frequency resources for the terminal device, where W is a positive integer, and the patterns of the W time-frequency resources include the pattern of the i^{th} time-frequency resource. The network device may send the first information to the terminal device, where the first information includes the indication information corresponding to the i^{th} time-frequency resource, the indication information corresponding to the i^{th} time-frequency resource includes the pattern indication information of the i^{th} time-frequency resource, and the pattern indication information of the i^{th} time-frequency resource includes the index of the pattern of the i^{th} time-frequency resource.

Manner 2: The pattern indication information of the i^{th} time-frequency resource includes a parameter used to determine the pattern of the i^{th} time-frequency resource.

For example, the pattern indication information of the i^{th} time-frequency resource may include a quantity M of consecutive slots occupied by the i^{th} time-frequency resource in time domain, a quantity N of consecutive RBs occupied by the i^{th} time-frequency resource in frequency domain, a quantity K of measurement resource blocks included in the i^{th} time-frequency resource, and a related parameter indicating locations of the K measurement resource blocks.

Manner 3: The pattern of the i^{th} time-frequency resource is determined based on a pattern of a repetition block in the i^{th} time-frequency resource, a quantity C1 of repetitions of the repetition block in time domain, and a quantity C2 of frequency-domain repetitions of the repetition block in frequency domain.

The repetition block occupies m consecutive slots in time domain, and occupies n consecutive RBs in frequency domain. The repetition block includes k measurement resource blocks. The pattern of the repetition block indicates locations of the k measurement resource blocks in the repetition block. C1, C2, m, n, and k are positive integers, k≤m*n, M=m*C1, N=n*C2, and K=k*C1*C2.

It can be learned from the foregoing Manner 3 that the pattern of the i^{th} time-frequency resource is jointly determined based on the pattern of the repetition block, the quantity C1 of the repetitions of the repetition block in time domain, and the quantity C2 of the frequency-domain repetitions of the repetition block in frequency domain. The quantity K of the measurement resource blocks included in the i^{th} time-frequency resource is also determined based on the quantity k of the measurement resource blocks included in the repetition block, the quantity C1 of the repetitions of the repetition block in time domain, and the quantity C2 of the frequency-domain repetitions of the repetition block in frequency domain.

In a possible implementation, the pattern indication information of the i^{th} time-frequency resource includes pattern indication information of the repetition block, the quantity C1 of the repetitions of the repetition block in time domain, and the quantity C2 of the repetitions of the repetition block in frequency domain.

It may be understood that values of C1 and C2 may be preconfigured by the network device, agreed on in a protocol, or independently configured for each time-frequency resource. This is not limited in this application.

For example, the pattern indication information of the repetition block may be determined in, but not limited to, the following manners.

Manner A: The pattern indication information of the repetition block includes an index of the pattern of the repetition block, or a parameter used to determine the pattern of the repetition block.

For example, the network device may configure a pattern of at least one repetition block for the terminal device in advance. Further, pattern indication information that is of the repetition block and that is sent by the network device to the terminal device may include an index of the pattern of the repetition block. Alternatively, pattern indication information that is of the repetition block and that is sent by the network device to the terminal device may include a parameter used to determine the pattern of the repetition block. For example, the parameter used to determine the pattern of the repetition block may include a quantity m of consecutive slots occupied by the repetition block in time domain, a quantity n of consecutive RBs occupied by the repetition block in frequency domain, a quantity k of measurement resource blocks included in the repetition block, and a related parameter indicating locations of the k measurement resource blocks.

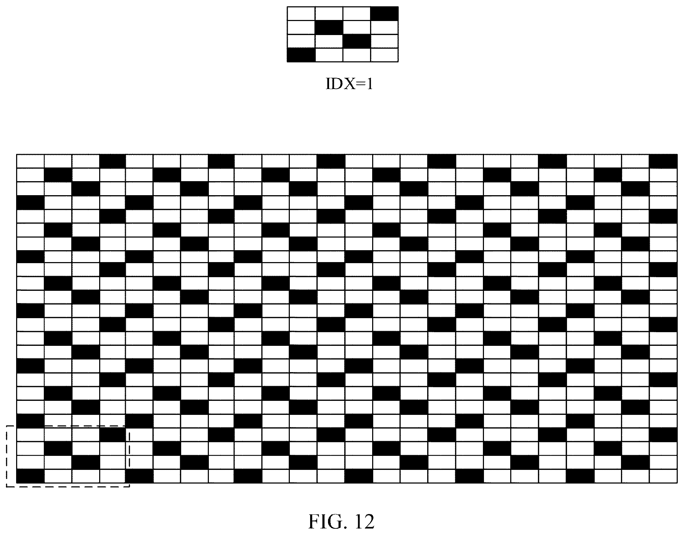

For example, the pattern indication information of the i^{th} time-frequency resource includes the index (IDX=1) of the pattern of the repetition block, the quantity C1=6 of the repetitions of the repetition block in time domain, and the quantity C2=6 of the repetitions of the repetition block in frequency domain. The pattern of the i^{th} time-frequency resource is shown in FIG. 12. In FIG. 12, a horizontal axis represents a slot, and a vertical axis represents an RB. The repetition block corresponding to IDX=1 occupies four consecutive slots in time domain, that is, m=4, and the repetition block corresponding to IDX=1 occupies four consecutive RBs in frequency domain, that is, n=4. The repetition block corresponding to IDX=1 includes four measurement resource blocks, that is, k=4. It can be learned that the i^{th} time-frequency resource occupies 24 consecutive slots in time domain, that is, M=m*C1=4*6=24, and the i^{th} time-frequency resource occupies 24 consecutive RBs in frequency domain, that is, N=n*C2=4*6=24. The i^{th} time-frequency resource includes 144 measurement resource blocks, that is, K=k*C1*C2=4*6*6=144.

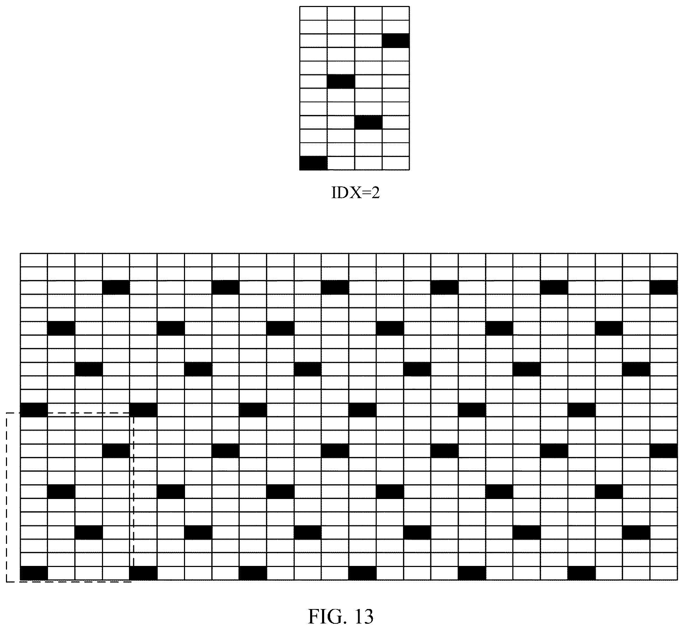

For another example, the pattern indication information of the i^{th} time-frequency resource includes the index (IDX=2) of the pattern of the repetition block, the quantity C1=6 of the repetitions of the repetition block in time domain, and the quantity C2=2 of the repetitions of the repetition block in frequency domain. The pattern of the i^{th} time-frequency resource is shown in FIG. 13. In FIG. 13, a horizontal axis represents a slot, and a vertical axis represents an RB. The repetition block corresponding to IDX=2 occupies four consecutive slots in time domain, that is, m=4, and the repetition block corresponding to IDX=2 occupies 12 consecutive RBs in frequency domain, that is, n=12. The repetition block corresponding to IDX=2 includes four measurement resource blocks, that is, k=4. It can be learned that the i^{th} time-frequency resource occupies 24 consecutive slots in time domain, that is, M=m*C1=4*6=24, and the i^{th} time-frequency resource occupies 24 consecutive RBs in frequency domain, that is, N=n*C2=12*2=24. The i^{th} time-frequency resource includes 48 measurement resource blocks, that is, K=k*C1*C2=4*6*2=48.

For example, it is assumed that the first information includes one piece of indication information and a periodicity. A pattern of a time-frequency resource indicated by the piece of indication information is shown in FIG. 13, and a corresponding pattern of an RE for uplink interference measurement is shown in FIG. 10. The periodicity T is equal to 100 slots. In this case, a total quantity of resources for uplink interference measurement in a single periodicity is 24 * 100* 12 * 14=403,200 REs. 24 represents 24 RBs, the 24 RBs indicate that the time-frequency resource occupies 24 consecutive RBs in frequency domain, and each RB includes 12 consecutive subcarriers. 100 represents 100 slots, the 100 slots are a total quantity of slots included in the single periodicity, and each slot includes 14 consecutive symbols.

As shown in FIG. 10, the quantity of the REs for uplink interference measurement in each measurement block is 2*4=8. As shown in FIG. 13, the time-frequency resource includes 48 measurement resource blocks, and the total quantity of the resources for uplink interference measurement is 48*8=384 REs.

Therefore, resource overheads for uplink interference measurement are only 384/403200=0.095%, and decrease by 99.24% in comparison with 12.5% in the conventional technology, where 1-0.095/12.5=99.24%.

It may be understood that, if the quantity C1 of the repetitions of the repetition block in time domain is equal to 1, and the quantity C2 of the frequency-domain repetitions of the repetition block in frequency domain is equal to 1, the pattern of the i^{th} time-frequency resource is the pattern of the repetition block.

In the foregoing Manner A, a design with low resource overheads is met, and signaling overheads can be reduced.

Manner B: The pattern indication information of the repetition block includes pattern indication information of a first time-frequency resource element and pattern indication information of a second time-frequency resource element. The pattern indication information of the first time-frequency resource element includes an index of a pattern of the first time-frequency resource element or a parameter used to determine a pattern of the first time-frequency resource element, and the pattern indication information of the second time-frequency resource element includes an index of a pattern of the second time-frequency resource element or a parameter used to determine a pattern of the second time-frequency resource element.

In this case, the pattern of the repetition block is determined based on the pattern of the first time-frequency resource element and the pattern of the second time-frequency resource element. The first time-frequency resource element occupies m1 consecutive slots in time domain, and occupies n1 consecutive RBs in frequency domain, and the first time-frequency resource element includes s1 measurement resource blocks. The second time-frequency resource element occupies m2 consecutive slots in time domain, and occupies n2 consecutive RBs in frequency domain, and the second time-frequency resource element includes s2 measurement resource blocks. m1, m2, n1, n2, s1, and s2 are positive integers, k=s1*s2, m=m1*m2, and n=n1*n2.

The pattern of the first time-frequency resource element indicates locations of the s1 measurement resource blocks in the first time-frequency resource element, and the pattern of the second time-frequency resource element indicates locations of the s2 measurement resource blocks in the second time-frequency resource element. For example, in the second time-frequency resource element, m2=n2=s2, and the s2 measurement resource blocks do not overlap in time domain or frequency domain.

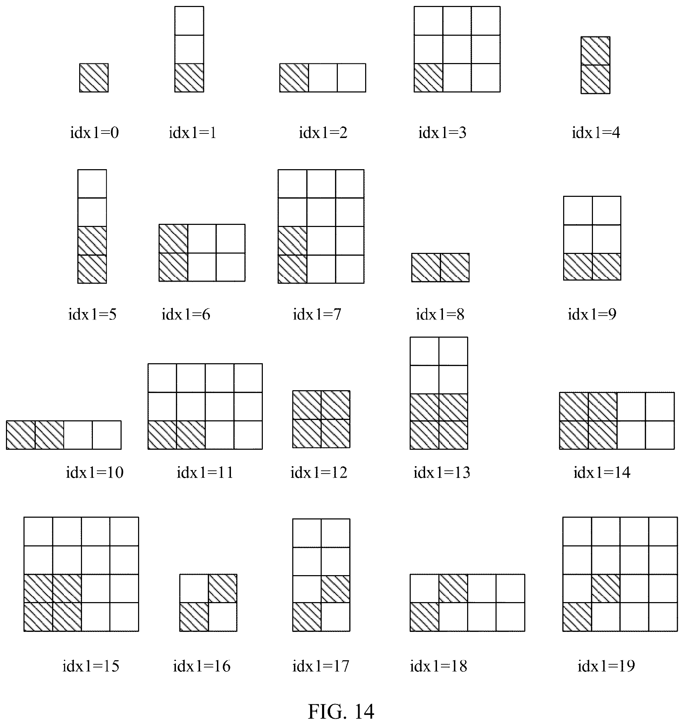

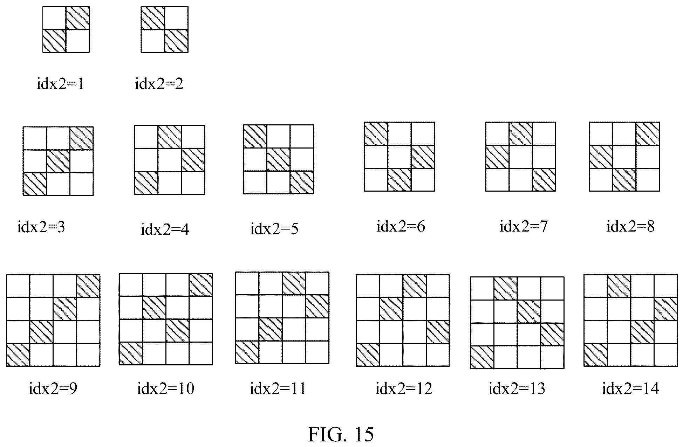

For example, a horizontal axis represents a slot, and a vertical axis represents an RB. FIG. 14 is a diagram of the pattern of the first time-frequency resource element, and FIG. 15 is a diagram of the pattern of the second time-frequency resource element. idx1 represents the index of the pattern of the first time-frequency resource element, and idx2 represents the index of the pattern of the second time-frequency resource element. idx2=0 represents that there is no second time-frequency resource element. In this case, the pattern of the first time-frequency resource element is the pattern of the repetition block.

The following describes the foregoing Manner B in detail with reference to specific examples.

Example a: It is assumed that the pattern indication information of the i^{th} time-frequency resource includes the index (idx1=0) of the pattern of the first time-frequency resource element, the index (idx2=10) of the pattern of the second time-frequency resource element, the quantity C1=6 of the repetitions of the repetition block in time domain, and the quantity C2=6 of the repetitions of the repetition block in frequency domain.

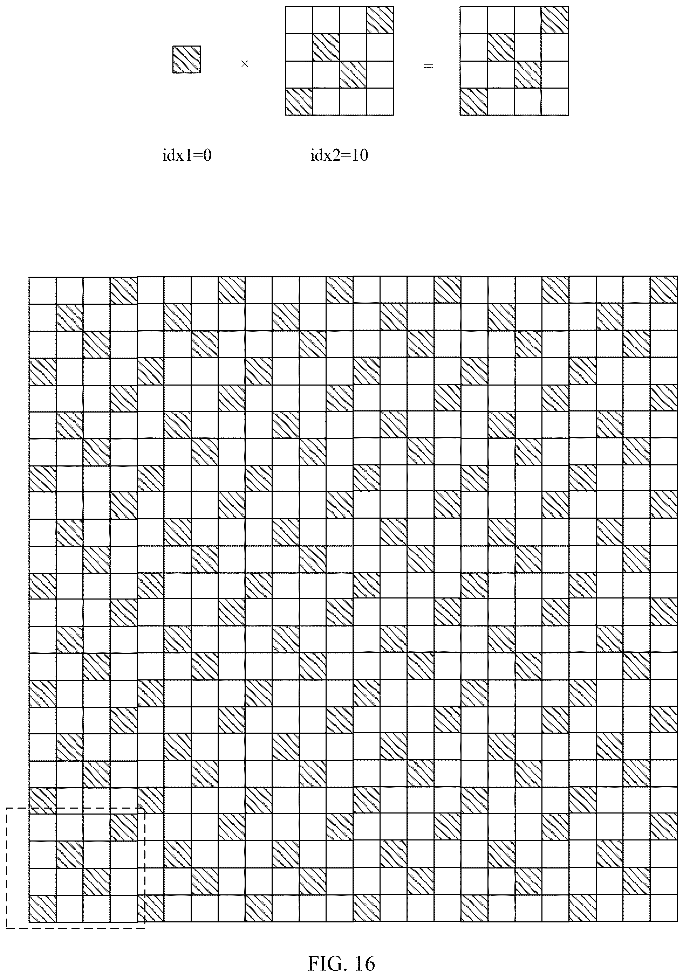

The pattern of the first time-frequency resource element may be determined based on FIG. 14 and idx1=0, and the pattern of the second time-frequency resource element may be determined based on FIG. 15 and idx2=10. Further, as shown in an upper portion of FIG. 16, the pattern of the repetition block may be obtained. A horizontal axis represents a slot, and a vertical axis represents an RB. The first time-frequency resource element corresponding to idx1=0 occupies one slot in time domain, that is, m1=1, and the first time-frequency resource element corresponding to idx1=0 occupies one RB in frequency domain, that is, n1=1. The first time-frequency resource element corresponding to idx1=0 includes one measurement resource block, that is, s1=1. The second time-frequency resource element corresponding to idx2=10 occupies four consecutive slots in time domain, that is, m2=4, and the second time-frequency resource element corresponding to idx2=10 occupies four consecutive RBs in frequency domain, that is, n2=4. The second time-frequency resource element corresponding to idx2=10 includes four measurement resource blocks, that is, s2=4. It may be learned that the repetition block occupies four consecutive slots in time domain, that is, m=m1 *m2=1 *4=4, and the repetition block occupies four consecutive RBs in frequency domain, that is, n=n1*n2=1*4=4. The repetition block includes four measurement resource blocks, that is, k=s1*s2=1*4=4.

Further, the pattern of the i^{th} time-frequency resource is shown in a lower portion of FIG. 16. The i^{th} time-frequency resource occupies 24 consecutive slots in time domain, that is, M=m*C1=4*6=24, and the i^{th} time-frequency resource occupies 24 consecutive RBs in frequency domain, that is, N=n*C2=4*6=24. The i^{th} time-frequency resource includes 144 measurement resource blocks, that is, K=k*C1*C2=4*6*6=144.

Example b: It is assumed that the pattern indication information of the i^{th} time-frequency resource includes the index (idx1=1) of the pattern of the first time-frequency resource element, the index (idx2=10) of the pattern of the second time-frequency resource element, the quantity C1=6 of the repetitions of the repetition block in time domain, and the quantity C2=2 of the repetitions of the repetition block in frequency domain.

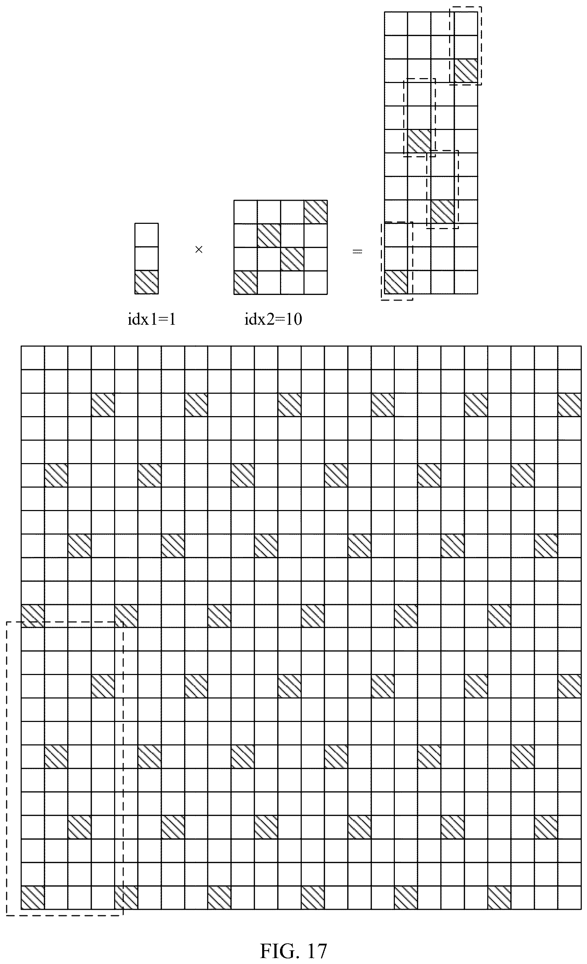

The pattern of the first time-frequency resource element may be determined based on FIG. 14 and idx1=1, and the pattern of the second time-frequency resource element may be determined based on FIG. 15 and idx2=10. Further, as shown in an upper portion of FIG. 17, the pattern of the repetition block may be obtained. A horizontal axis represents a slot, and a vertical axis represents an RB. The first time-frequency resource element corresponding to idx1=1 occupies one slot in time domain, that is, m1=1, and the first time-frequency resource element corresponding to idx1=1 occupies three consecutive RBs in frequency domain, that is, n1=3. The first time-frequency resource element corresponding to idx1=1 includes one measurement resource block, that is, s1=1. The second time-frequency resource element corresponding to idx2=10 occupies four consecutive slots in time domain, that is, m2=4, and the second time-frequency resource element corresponding to idx2=10 occupies four consecutive RBs in frequency domain, that is, n2=4. The second time-frequency resource element corresponding to idx2=10 includes four measurement resource blocks, that is, s2=4. It may be learned that the repetition block occupies four consecutive slots in time domain, that is, m=m1*m2=1*4=4, and the repetition block occupies 12 consecutive RBs in frequency domain, that is, n=n1*n2=3*4=12. The repetition block includes four measurement resource blocks, that is, k=s1*s2=1*4=4.

Further, the pattern of the i^{th} time-frequency resource is shown in a lower portion of FIG. 17. The i^{th} time-frequency resource occupies 24 consecutive slots in time domain, that is, M=m*C1=4*6=24, and the i^{th} time-frequency resource occupies 24 consecutive RBs in frequency domain, that is, N=n*C2=12*2=24. The i^{th} time-frequency resource includes 48 measurement resource blocks, that is, K=k*C1*C2=4*6*2=48.

Example c: It is assumed that the pattern indication information of the i^{th} time-frequency resource includes the index (idx 1=2) of the pattern of the first time-frequency resource element, the index (idx2=14) of the pattern of the second time-frequency resource element, the quantity C1=2 of the repetitions of the repetition block in time domain, and the quantity C2=6 of the repetitions of the repetition block in frequency domain.

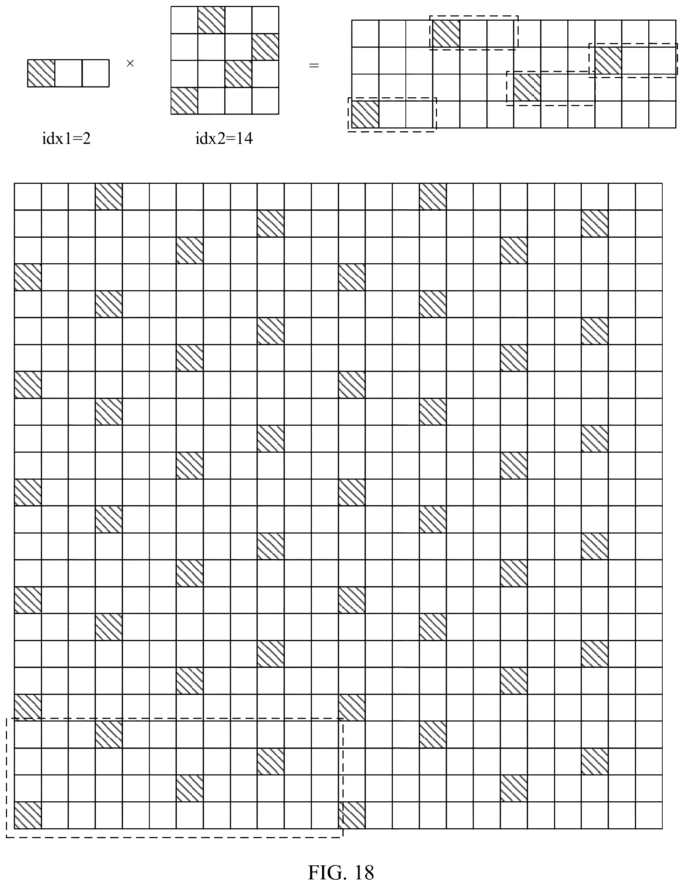

The pattern of the first time-frequency resource element may be determined based on FIG. 14 and idx1=2, and the pattern of the second time-frequency resource element may be determined based on FIG. 15 and idx2=14. Further, as shown in an upper portion of FIG. 18, the pattern of the repetition block may be obtained. A horizontal axis represents a slot, and a vertical axis represents an RB. The first time-frequency resource element corresponding to idx1=2 occupies three slots in time domain, that is, m1=3, and the first time-frequency resource element corresponding to idx1=2 occupies one RB in frequency domain, that is, n1=1. The first time-frequency resource element corresponding to idx1=2 includes one measurement resource block, that is, s1=1. The second time-frequency resource element corresponding to idx2=14 occupies four consecutive slots in time domain, that is, m2=4, and the second time-frequency resource element corresponding to idx2=14 occupies four consecutive RBs in frequency domain, that is, n2=4. The second time-frequency resource element corresponding to idx2=10 includes four measurement resource blocks, that is, s2=4. It may be learned that the repetition block occupies 12 consecutive slots in time domain, that is, m=m1*m2=3*4=12, and the repetition block occupies four consecutive RBs in frequency domain, that is, n=n1*n2=1*4=4. The repetition block includes four measurement resource blocks, that is, k=s1*s2=1*4=4.

Further, the pattern of the i^{th} time-frequency resource is shown in a lower portion of FIG. 18. The i^{th} time-frequency resource occupies 24 consecutive slots in time domain, that is, M=m*C1=12*2=24, and the i^{th} time-frequency resource occupies 24 consecutive RBs in frequency domain, that is, N=n*C2=4*6=24. The i^{th} time-frequency resource includes 48 measurement resource blocks, that is, K=k*C1*C2=4*2*6=48.

Example d: It is assumed that the pattern indication information of the i^{th} time-frequency resource includes the index (idx1=3) of the pattern of the first time-frequency resource element, the index (idx2=14) of the pattern of the second time-frequency resource element, the quantity C1=2 of the repetitions of the repetition block in time domain, and the quantity C2=2 of the repetitions of the repetition block in frequency domain.

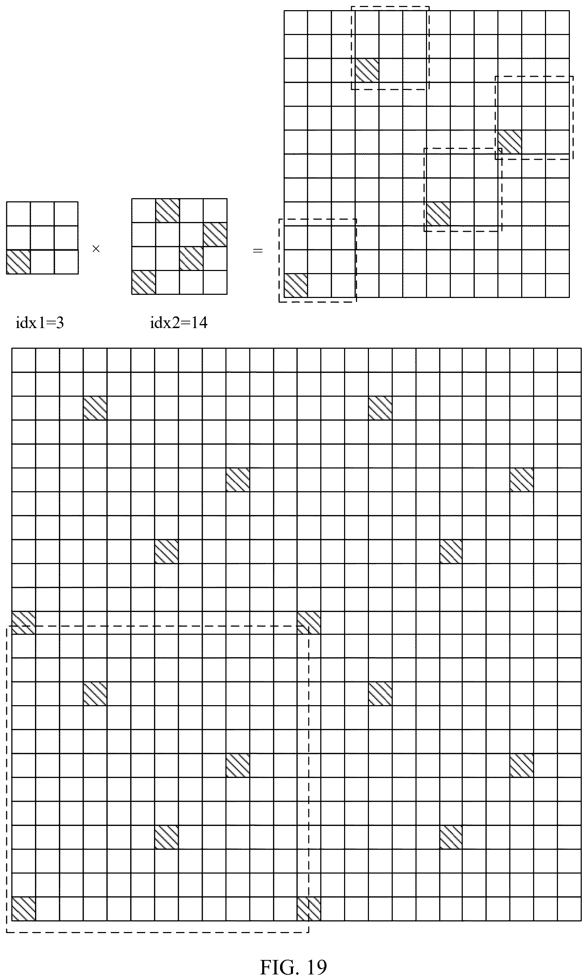

The pattern of the first time-frequency resource element may be determined based on FIG. 14 and idx1=3, and the pattern of the second time-frequency resource element may be determined based on FIG. 15 and idx2=14. Further, as shown in an upper portion of FIG. 19, the pattern of the repetition block may be obtained. A horizontal axis represents a slot, and a vertical axis represents an RB. The first time-frequency resource element corresponding to idx1=3 occupies three consecutive slots in time domain, that is, m1=3, and the first time-frequency resource element corresponding to idx1=3 occupies three consecutive RBs in frequency domain, that is, n1=3. The first time-frequency resource element corresponding to idx1=3 includes one measurement resource block, that is, s1=1. The second time-frequency resource element corresponding to idx2=14 occupies four consecutive slots in time domain, that is, m2=4, and the second time-frequency resource element corresponding to idx2=14 occupies four consecutive RBs in frequency domain, that is, n2=4. The second time-frequency resource element corresponding to idx2=10 includes four measurement resource blocks, that is, s2=4. It may be learned that the repetition block occupies 12 consecutive slots in time domain, that is, m=m1*m2=3*4=12, and the repetition block occupies 12 consecutive RBs in frequency domain, that is, n=n1*n2=3*4=12. The repetition block includes four measurement resource blocks, that is, k=s1*s2=1*4=4.

Further, the pattern of the i^{th} time-frequency resource is shown in a lower portion of FIG. 19. The i^{th} time-frequency resource occupies 24 consecutive slots in time domain, that is, M=m*C1=12*2=24, and the i^{th} time-frequency resource occupies 24 consecutive RBs in frequency domain, that is, N=n*C2=12*2=24. The i^{th} time-frequency resource includes 16 measurement resource blocks, that is, K=k*C1*C2=4*2*2=16.

Example e: It is assumed that the pattern indication information of the i^{th} time-frequency resource includes the index (idx1=4) of the pattern of the first time-frequency resource element, the index (idx2=0) of the pattern of the second time-frequency resource element, the quantity C1=1 of the repetitions of the repetition block in time domain, and the quantity C2=6 of the repetitions of the repetition block in frequency domain. Alternatively, it is assumed that the pattern indication information of the i^{th} time-frequency resource includes the index (IDX=0) of the pattern of the repetition block, the quantity C1=1 of the repetitions of the repetition block in time domain, and the quantity C2=6 of the repetitions of the repetition block in frequency domain.

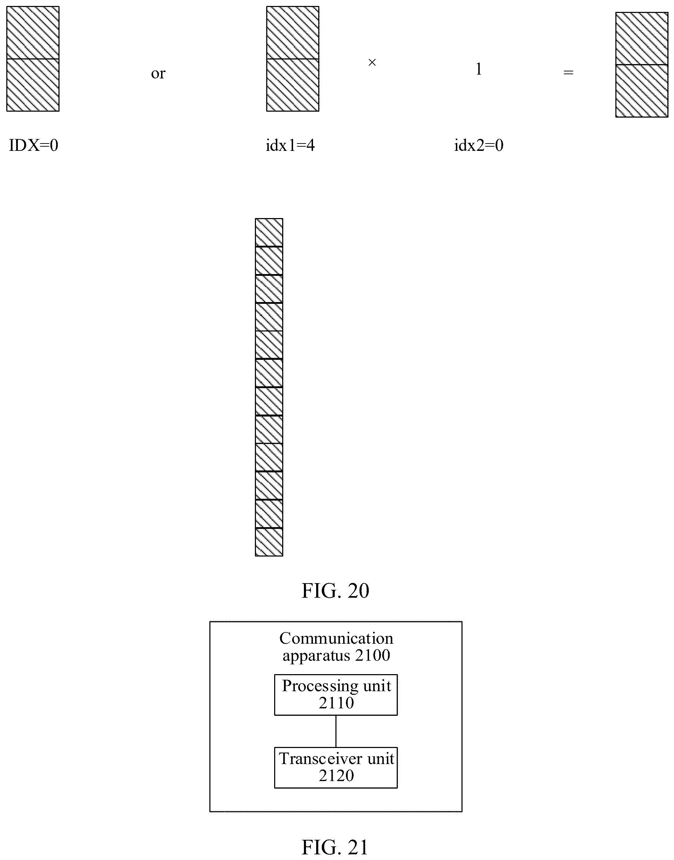

The pattern of the first time-frequency resource element may be determined based on FIG. 14 and idx1=4. idx2=0 represents that the pattern of the second time-frequency resource element is empty, and is denoted as 1. Further, as shown in an upper portion of FIG. 20, the pattern of the repetition block may be obtained. It may be understood that when idx2=0, the pattern of the first time-frequency resource element is the pattern of the repetition block.

A horizontal axis represents a slot, and a vertical axis represents an RB. The first time-frequency resource element corresponding to idx1=4 occupies one slot in time domain, that is, m1=1, and the first time-frequency resource element corresponding to idx1=4 occupies two consecutive RBs in frequency domain, that is, n1=2. The first time-frequency resource element corresponding to idx1=4 includes two measurement resource blocks, that is, s1=2. It may be learned that the repetition block occupies one slot in time domain, that is, m=m1=1, and the repetition block occupies two consecutive RBs in frequency domain, that is, n=n1=2. The repetition block includes two measurement resource blocks, that is, k=s1=2.

Further, the pattern of the i^{th} time-frequency resource is shown in a lower portion of FIG. 20. The i^{th} time-frequency resource occupies one slot in time domain, that is, M=m*C1=1*1=1, and the i^{th} time-frequency resource occupies 12 consecutive RBs in frequency domain, that is, N=n*C2=2*6=12. The i^{th} time-frequency resource includes 12 measurement resource blocks, that is, K=k*C1*C2=2*1*6=12.

It may be understood that the foregoing examples are merely examples and are not intended to limit this application.

In a possible design, the pattern of the first time-frequency resource element is determined based on a power change rate of the uplink interference signal in frequency domain and/or time domain.

For example, the change rate of the uplink interference signal in frequency domain may be determined based on interference power corresponding to adjacent RBs. If the interference power corresponding to the adjacent RBs is less than a first preset threshold, that is, a frequency selective characteristic of the uplink interference is not distinct, the pattern of the first time-frequency unit may be adjusted to reduce overheads of a measurement block in frequency domain.

For example, it is assumed that the pattern of the i^{th} time-frequency resource configured by the network device for the terminal device is shown in FIG. 16. If the network device obtains, through measurement for a period of time, the interference power corresponding to the adjacent RBs, and determines, based on the interference power corresponding to the adjacent RBs, that an interference power change rate in frequency domain is less than the first preset threshold, the network device may reconfigure a time-frequency resource, and adjust the pattern of the first time-frequency unit to reduce overheads of the measurement block in frequency domain. For example, the index of the pattern of the first time-frequency unit is changed from idx1=0 to idx1=1, so that a pattern of the reconfigured time-frequency resource is shown in FIG. 17. In comparison with FIG. 16, measurement blocks in FIG. 17 are sparsely distributed in frequency domain, so that resource overheads for uplink interference measurement can be further reduced.

For example, the change rate of the uplink interference signal in time domain may be determined based on interference power corresponding to adjacent slots. If the interference power corresponding to adjacent moments is less than a second preset threshold, that is, a time-varying characteristic of the uplink interference is not distinct, the pattern of the first time-frequency unit may be adjusted to reduce overheads of a measurement block in time domain.

Example 1: It is assumed that the pattern of the i^{th} time-frequency resource configured by the network device for the terminal device is shown in FIG. 16. If the network device obtains, through measurement for a period of time, the interference power corresponding to the adjacent slots, and determines, based on the interference power corresponding to the adjacent slots, that an interference power change rate in time domain is less than the second preset threshold, the network device may reconfigure a time-frequency resource, and adjust the pattern of the first time-frequency unit to reduce overheads of the measurement block in time domain. For example, the index of the pattern of the first time-frequency unit is changed from idx1=0 to idx1=2, and the index of the pattern of the second time-frequency unit is changed from idx2=10 to idx2=14, so that a pattern of the reconfigured time-frequency resource is shown in FIG. 18. In comparison with FIG. 16, measurement blocks in FIG. 18 are sparsely distributed in time domain, so that resource overheads for uplink interference measurement can be further reduced.

Example 2: It is assumed that the pattern of the i^{th} time-frequency resource configured by the network device for the terminal device is shown in FIG. 16. If the network device determines, through measurement for a period of time, that an interference power change rate in frequency domain is less than the first preset threshold and an interference power change rate in time domain is less than the second preset threshold, the network device may reconfigure a time-frequency resource, and adjust the pattern of the first time-frequency unit to reduce overheads of the measurement block in time domain and in frequency domain. For example, the index of the pattern of the first time-frequency unit is changed from idx1=0 to idx1=3, and the index of the pattern of the second time-frequency unit is changed from idx2=10 to idx2=14, so that a pattern of the reconfigured time-frequency resource is shown in FIG. 19. In comparison with FIG. 16, measurement blocks in FIG. 19 are sparsely distributed both in time domain and in frequency domain, so that resource overheads for uplink interference measurement can be further reduced.

It may be understood that, in the foregoing Example 1 and Example 2, changing the index of the pattern of the second time-frequency unit from idx2=10 to idx2=14 does not affect resource overheads. Alternatively, the index of the pattern of the second time-frequency unit may not be changed.

In the foregoing Manner B, resource overheads can be reduced and resources can be diversified, and signaling overheads can also be reduced. The network device may select an appropriate pattern of a first resource element and an appropriate pattern of a second resource element based on an uplink interference measurement result, to obtain patterns of an expected repetition block and an expected time-frequency resource. In this way, resource configuration optimization is implemented and resource overheads are further reduced.

In conclusion, in this application, an RE for uplink interference measurement does not occupy all REs included in each measurement resource block, so that the REs are sparsely distributed in time-frequency domain, to reduce resource overheads. Further, a repetition block is configured and a quantity of repetitions of the repetition block in time-frequency domain is set, so that distribution of measurement blocks has characteristics of long time and is in a plurality of bands. Therefore, an uplink interference signal can be measured in time-frequency domain in a large range, and a statistical characteristic of the uplink interference signal in time-frequency domain can be obtained.

In addition, uplink interference is in a beam level. To be specific, in a single-satellite multi-beam scenario, a satellite receives different interference in different beam directions. Therefore, each time-frequency resource may correspond to one beam direction. The beam direction herein is a direction of a receive beam of the network device. For example, if the i^{th} time-frequency resource is associated with a j^{th} beam, the network device measures uplink interference on the i^{th} time-frequency resource. In this case, an uplink interference measurement result in a beam direction of the j^{th} beam may be obtained. j is a positive integer.

It may be understood that, to implement functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

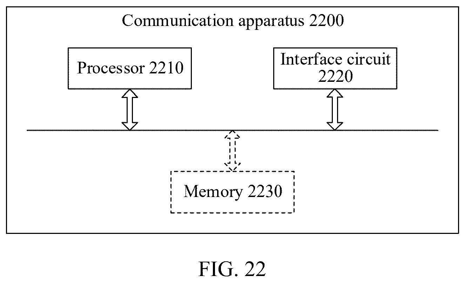

FIG. 21 and FIG. 22 each are a diagram of a structure of a possible communication apparatus according to an embodiment of this application. The communication apparatuses may be configured to implement a function of the terminal device or the network device in the foregoing method embodiments. Therefore, beneficial effects of the foregoing method embodiments can also be implemented. In this embodiment of this application, the communication apparatus may be one of 120a to 120g in FIG. 1, may be 110a, 110b, or 110c in FIG. 1, or may be a module (for example, a chip) used in a terminal device or a base station.

As shown in FIG. 21, the communication apparatus 2100 includes a processing unit 2110 and a transceiver unit 2120. The communication apparatus 2100 is configured to implement functions of the terminal device or the network device in the method embodiment shown in FIG. 2.

The communication apparatus 2100 is configured to implement functions of the network device in the method embodiment shown in FIG. 9.

In this case, the transceiver unit 2120 is configured to send first information to a terminal device, where the first information indicates at least one time-frequency resource. I time-frequency resources in at least one time-frequency resource occupy M consecutive slots in time domain and occupy N consecutive resource blocks RBs in frequency domain. Each of the I time-frequency resources includes K measurement resource blocks, and each measurement resource block occupies one slot in time domain and occupies one RB in frequency domain. A quantity of resource elements REs for uplink interference measurement in each measurement resource block is less than a total quantity of REs included in each measurement resource block. M, N, K, and I are positive integers, and K≤M*N; and

The processing unit 2110 invokes the transceiver unit 2120 to measure an uplink interference signal on the resource element for uplink interference measurement in each measurement resource block.

The communication apparatus 2100 is configured to implement functions of the terminal device in the method embodiment shown in FIG. 9.

In this case, the transceiver unit 2120 is configured to receive first information from a network device, where the first information indicates at least one time-frequency resource. I time-frequency resources in at least one time-frequency resource occupy M consecutive slots in time domain and occupy N consecutive resource blocks RBs in frequency domain. Each of the I time-frequency resources includes K measurement resource blocks, and each measurement resource block occupies one slot in time domain and occupies one RB in frequency domain. A quantity of resource elements REs for uplink interference measurement in each measurement resource block is less than a total quantity of REs included in each measurement resource block. M, N, K, and I are positive integers, and K≤M*N; and

The processing unit 2110 is configured to determine not to send a signal on the resource element for uplink interference measurement in each measurement resource block.

For more detailed descriptions of the processing unit 2110 and the transceiver unit 2120, directly refer to related descriptions of the method embodiment shown in FIG. 9. Details are not described herein again.

As shown in FIG. 22, a communication apparatus 2200 includes a processor 2210 and an interface circuit 2220. The processor 2210 and the interface circuit 2220 are coupled to each other. It may be understood that the interface circuit 2220 may be a transceiver or an input/output interface. Optionally, the communication apparatus 2200 may further include a memory 2230, configured to store instructions to be executed by the processor 2210, store input data required by the processor 2210 to run instructions, or store data generated after the processor 2210 runs instructions.

When the communication apparatus 2200 is configured to implement the method shown in FIG. 9, the processor 2210 is configured to implement functions of the processing unit 2110, and the interface circuit 2220 is configured to implement functions of the transceiver unit 2120.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

This application provides another example of an apparatus. A notification apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes one processor and one memory. As shown in FIG. 22, the communication apparatus 2200 includes one processor 2210 and one memory 2230. The processor 2210 is coupled to the memory 2230. The memory 2230 stores instructions. When the instructions stored in the memory 2230 are executed by the processor 2210, the communication apparatus 2200 performs the method performed by the network device or the terminal device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a network device or a terminal device. Alternatively, the processor and the storage medium may exist in a network device or a terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise specified or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and represents that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An uplink interference measurement method, wherein the method comprises:
sending, by a network device, first information to a terminal device, wherein the first information indicates at least one time-frequency resource, I time-frequency resources in the at least one time-frequency resource occupy M consecutive slots in time domain and occupy N consecutive resource blocks RBs in frequency domain, each of the I time-frequency resources comprises K measurement resource blocks, each measurement resource block occupies one slot in time domain and occupies one RB in frequency domain, and a quantity of resource elements REs for uplink interference measurement in each measurement resource block is less than a total quantity of REs comprised in each measurement resource block, wherein M, N, K, and I are positive integers, and K≤M*N; and
measuring, by the network device, an uplink interference signal on the resource element for uplink interference measurement in each measurement resource block.

2. An uplink interference measurement method, wherein the method comprises:
receiving, by a terminal device, first information from a network device, wherein the first information indicates at least one time-frequency resource, I time-frequency resources in the at least one time-frequency resource occupy M consecutive slots in time domain and occupy N RBs in frequency domain, each of the I time-frequency resources comprises K measurement resource blocks, each measurement resource block occupies one slot in time domain and occupies one RB in frequency domain, and a quantity of REs for uplink interference measurement in each measurement resource block is less than a total quantity of REs comprised in each measurement resource block, wherein M, N, K, and I are positive integers, and K≤M*N; and
skipping sending, by the terminal device, a signal on the resource element for uplink interference measurement in each measurement resource block.

3. The method according to claim 1 or 2, wherein the first information comprises S pieces of indication information, each piece of indication information indicates one time-frequency resource, the S pieces of indication information are in one-to-one correspondence with S time-frequency resources, S is a positive integer greater than or equal to 1, and when a value of S is greater than or equal to 2, the S time-frequency resources are different from each other; or
the at least one time-frequency resource is a periodic time-frequency resource, the first information comprises one piece of indication information and a periodicity, the piece of indication information indicates one time-frequency resource, and the periodicity is a periodicity of the time-frequency resource indicated by the piece of indication information.

4. The method according to any one of claims 1 to 3, wherein in the I time-frequency resources, indication information corresponding to the i^{th} time-frequency resource comprises at least one of the following: start slot indication information of the i^{th} time-frequency resource, start resource block indication information of the i^{th} time-frequency resource, pattern indication information of the i^{th} time-frequency resource, and pattern indication information of the RE for uplink interference measurement, wherein
a pattern of the i^{th} time-frequency resource is used to determine locations of the K measurement resource blocks in the i^{th} time-frequency resource, and a pattern of the RE for uplink interference measurement is used to determine a location of the RE for uplink interference measurement in the measurement resource block, wherein
i is any positive integer ranging from 1 to I.

5. The method according to any one of claims 1 to 4, wherein in the I time-frequency resources, the pattern of the i^{th} time-frequency resource is determined based on a pattern of a repetition block in the i^{th} time-frequency resource, a quantity C1 of repetitions of the repetition block in time domain, and a quantity C2 of frequency-domain repetitions of the repetition block in frequency domain, wherein
the repetition block occupies m consecutive slots in time domain and occupies n consecutive RBs in frequency domain, the repetition block comprises k measurement resource blocks, and the pattern of the repetition block indicates locations of the k measurement resource blocks in the repetition block, wherein
C1, C2, m, n, and k are positive integers, k≤m*n, M=m*C1, N=n*C2, and K=k*C1 *C2; and
i is any positive integer ranging from 1 to I.

6. The method according to claim 5, wherein the pattern indication information of the i^{th} time-frequency resource comprises pattern indication information of the repetition block, the quantity C1 of the repetitions of the repetition block in time domain, and the quantity C2 of the repetitions of the repetition block in frequency domain.

7. The method according to claim 6, wherein the pattern indication information of the repetition block comprises an index of the pattern of the repetition block, or a parameter used to determine the pattern of the repetition block.

8. The method according to claim 5 or 6, wherein the pattern of the repetition block is determined based on a pattern of a first time-frequency resource element and a pattern of a second time-frequency resource element, wherein the first time-frequency resource element occupies m1 consecutive slots in time domain and occupies n1 consecutive RBs in frequency domain, the first time-frequency resource element comprises s1 measurement resource blocks, the second time-frequency resource element occupies m2 consecutive slots in time domain and occupies n2 consecutive RBs in frequency domain, and the second time-frequency resource element comprises s2 measurement resource blocks, wherein m1, m2, n1, n2, s1, and s2 are positive integers, k=s1*s2, m=m1*m2, and n=n1*n2;
the pattern of the first time-frequency resource element indicates locations of the s1 measurement resource blocks in the first time-frequency resource element; and
the pattern of the second time-frequency resource element indicates locations of the s2 measurement resource blocks in the second time-frequency resource element.

9. The method according to claim 8, wherein in the second time-frequency resource element, m2=n2=s2, and the s2 measurement resource blocks do not overlap in time domain or frequency domain.

10. The method according to claim 8 or 9, wherein the pattern of the first time-frequency resource element is determined based on a power change rate of the uplink interference signal in frequency domain and/or time domain.

11. The method according to any one of claims 8 to 10, wherein the pattern indication information of the repetition block comprises pattern indication information of the first time-frequency resource element and pattern indication information of the second time-frequency resource element, wherein
the pattern indication information of the first time-frequency resource element comprises an index of the pattern of the first time-frequency resource element or a parameter used to determine the pattern of the first time-frequency resource element, and the pattern indication information of the second time-frequency resource element comprises an index of the pattern of the second time-frequency resource element or a parameter used to determine the pattern of the second time-frequency resource element.

12. The method according to any one of claims 4 to 11, wherein the pattern indication information of the RE for uplink interference measurement comprises a symbol quantity, a start symbol offset, a subcarrier quantity, and a start subcarrier offset; or
the pattern indication information of the RE for uplink interference measurement comprises a symbol quantity, a start symbol offset, a comb size, and a start subcarrier offset.

13. An uplink interference measurement apparatus, wherein the apparatus comprises:
a transceiver unit, configured to send first information to a terminal device, wherein the first information indicates at least one time-frequency resource, I time-frequency resources in the at least one time-frequency resource occupy M consecutive slots in time domain and occupy N consecutive resource blocks RBs in frequency domain, each of the I time-frequency resources comprises K measurement resource blocks, each measurement resource block occupies one slot in time domain and occupies one RB in frequency domain, and a quantity of resource elements REs for uplink interference measurement in each measurement resource block is less than a total quantity of REs comprised in each measurement resource block, wherein M, N, K, and I are positive integers, and K≤M*N; and
a processing unit, invoking the transceiver unit to measure an uplink interference signal on the resource element for uplink interference measurement in each measurement resource block.

14. An uplink interference measurement apparatus, wherein the apparatus comprises:
a transceiver unit, configured to receive first information from a network device, wherein the first information indicates at least one time-frequency resource, I time-frequency resources in the at least one time-frequency resource occupy M consecutive slots in time domain and occupy N consecutive resource blocks RBs in frequency domain, each of the I time-frequency resources comprises K measurement resource blocks, each measurement resource block occupies one slot in time domain and occupies one RB in frequency domain, and a quantity of resource elements REs for uplink interference measurement in each measurement resource block is less than a total quantity of REs comprised in each measurement resource block, wherein M, N, K, and I are positive integers, and K≤M*N; and
a processing unit, configured to determine not to send a signal on the resource element for uplink interference measurement in each measurement resource block.

15. The apparatus according to claim 13 or 14, wherein the first information comprises S pieces of indication information, each piece of indication information indicates one time-frequency resource, the S pieces of indication information are in one-to-one correspondence with S time-frequency resources, S is a positive integer greater than or equal to 1, and when a value of S is greater than or equal to 2, the S time-frequency resources are different from each other; or
the at least one time-frequency resource is a periodic time-frequency resource, the first information comprises one piece of indication information and a periodicity, the piece of indication information indicates one time-frequency resource, and the periodicity is a periodicity of the time-frequency resource indicated by the piece of indication information.

16. The apparatus according to any one of claims 13 to 15, wherein in the I time-frequency resources, indication information corresponding to the i^{th} time-frequency resource comprises at least one of the following: start slot indication information of the i^{th} time-frequency resource, start resource block indication information of the i^{th} time-frequency resource, pattern indication information of the i^{th} time-frequency resource, and pattern indication information of the RE for uplink interference measurement, wherein
a pattern of the i^{th} time-frequency resource is used to determine locations of the K measurement resource blocks in the i^{th} time-frequency resource, and a pattern of the RE for uplink interference measurement is used to determine a location of the RE for uplink interference measurement in the measurement resource block, wherein
i is any positive integer ranging from 1 to I.

17. The apparatus according to any one of claims 13 to 16, wherein in the I time-frequency resources, the pattern of the i^{th} time-frequency resource is determined based on a pattern of a repetition block in the i^{th} time-frequency resource, a quantity C1 of repetitions of the repetition block in time domain, and a quantity C2 of frequency-domain repetitions of the repetition block in frequency domain, wherein
the repetition block occupies m consecutive slots in time domain and occupies n consecutive RBs in frequency domain, the repetition block comprises k measurement resource blocks, and the pattern of the repetition block indicates locations of the k measurement resource blocks in the repetition block, wherein
C1, C2, m, n, and k are positive integers, k≤m*n, M=m*C1, N=n*C2, and K=k*C1*C2; and
i is any positive integer ranging from 1 to I.

18. The apparatus according to claim 17, wherein the pattern indication information of the i^{th} time-frequency resource comprises pattern indication information of the repetition block, the quantity C1 of the repetitions of the repetition block in time domain, and the quantity C2 of the repetitions of the repetition block in frequency domain.

19. The apparatus according to claim 18, wherein the pattern indication information of the repetition block comprises an index of the pattern of the repetition block, or a parameter used to determine the pattern of the repetition block.

20. The apparatus according to claim 17 or 18, wherein the pattern of the repetition block is determined based on a pattern of a first time-frequency resource element and a pattern of a second time-frequency resource element, wherein the first time-frequency resource element occupies m1 consecutive slots in time domain and occupies n1 consecutive RBs in frequency domain, the first time-frequency resource element comprises s1 measurement resource blocks, the second time-frequency resource element occupies m2 consecutive slots in time domain and occupies n2 consecutive RBs in frequency domain, and the second time-frequency resource element comprises s2 measurement resource blocks, wherein m1, m2, n1, n2, s1, and s2 are positive integers, k=s1*s2, m=m1*m2, and n=n1*n2;
the pattern of the first time-frequency resource element indicates locations of the s1 measurement resource blocks in the first time-frequency resource element; and
the pattern of the second time-frequency resource element indicates locations of the s2 measurement resource blocks in the second time-frequency resource element.

21. The apparatus according to claim 20, wherein in the second time-frequency resource element, m2=n2=s2, and the s2 measurement resource blocks do not overlap in time domain or frequency domain.

22. The apparatus according to claim 20 or 21, wherein the pattern of the first time-frequency resource element is determined based on a power change rate of the uplink interference signal in frequency domain and/or time domain.

23. The apparatus according to any one of claims 20 to 22, wherein the pattern indication information of the repetition block comprises pattern indication information of the first time-frequency resource element and pattern indication information of the second time-frequency resource element, wherein
the pattern indication information of the first time-frequency resource element comprises an index of the pattern of the first time-frequency resource element or a parameter used to determine the pattern of the first time-frequency resource element, and the pattern indication information of the second time-frequency resource element comprises an index of the pattern of the second time-frequency resource element or a parameter used to determine the pattern of the second time-frequency resource element.

24. The apparatus according to any one of claims 16 to 23, wherein the pattern indication information of the RE for uplink interference measurement comprises a symbol quantity, a start symbol offset, a subcarrier quantity, and a start subcarrier offset; or
the pattern indication information of the RE for uplink interference measurement comprises a symbol quantity, a start symbol offset, a comb size, and a start subcarrier offset.

25. A communication apparatus, comprising a unit or a module configured to perform the method according to any one of claims 1 to 12.

26. A communication apparatus, comprising one or more processors and one or more memories, wherein the one or more memories store one or more programs, and when the program is executed by the one or more processors, the apparatus is caused to perform the method according to any one of claims 1 to 12.

27. A chip system, wherein the chip system comprises at least one chip and a memory, and the at least one chip is configured to read and execute a program stored in the memory, to implement the method according to any one of claims 1 to 12.

28. A readable storage medium, wherein the readable storage medium comprises a program, and when the program runs on an apparatus, the apparatus is caused to perform the method according to any one of claims 1 to 12.
